(19) Europäisches Patentamt
European Patent Office
Office européen des brevets

(11) EP 1 222 558 B1

(12) **EUROPEAN PATENT SPECIFICATION**

(45) Date of publication and mention of the grant of the patent:
**09.07.2003 Bulletin 2003/28**

(21) Application number: **00932185.2**

(22) Date of filing: **09.05.2000**

(51) Int Cl.$^7$: **G06F 15/173**

(86) International application number:
**PCT/US00/12574**

(87) International publication number:
**WO 01/022247 (29.03.2001 Gazette 2001/13)**

(54) **VIRTUAL CHANNELS AND CORRESPONDING BUFFER ALLOCATIONS FOR DEADLOCK-FREE COMPUTER SYSTEM OPERATION**

VITUELLE KANÄLE UND ENTSPRECHENDE PUFFERZUWEISUNGEN FÜR EINEN BLOCKIERUNGFREIEN RECHNERSYSTEM -BETRIEB

CANAUX VIRTUELS ET AFFECTATIONS DE TAMPONS CORRESPONDANTS PERMETTANT DE FAIRE FONCTIONNER UN SYSTEME INFORMATIQUE SANS INTERBLOCAGES

(84) Designated Contracting States:
**DE GB**

(30) Priority: **17.09.1999 US 399281**

(43) Date of publication of application:
**17.07.2002 Bulletin 2002/29**

(73) Proprietor: **ADVANCED MICRO DEVICES INC.**
**Sunnyvale, California 94088-3453 (US)**

(72) Inventors:
- **KELLER, James, B.**
  **Palo Alto, CA 94303 (US)**
- **MEYER, Derrick, R.**
  **Austin, TX 78733 (US)**

(74) Representative:
**Sanders, Peter Colin Christopher et al**
**Brookes Batchellor,**
**102-108 Clerkenwell Road**
**London EC1M 5SA (GB)**

(56) References cited:
**US-A- 5 533 198** **US-A- 5 754 789**

- **V. S. ADVE, M. K. VERNON: "Performance Analysis of mash interconncetion networks with deterministic routing" INTERNET, [Online] 1994, pages 1-40, XP002155424 Retrieved from the Internet: <URL:rice.edu/ dve/Papers...TPDS.mesh.ps.g z> [retrieved on 2000-12-13]**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

## BACKGROUND OF THE INVENTION

### 1. Technical Field

This invention is related to the field of computer systems and, more particularly, to interconnect between nodes in computer systems.

### 2. Background Art

Generally, personal computers (PCs) and other types of computer systems have been designed around a shared bus system for accessing memory. One or more processors and one or more input/output (I/O) devices are coupled to memory through the shared bus. The I/O devices may be coupled to the shared bus through an I/O bridge which manages the transfer of information between the shared bus and the I/O devices, while processors are typically coupled directly to the shared bus or are coupled through a cache hierarchy to the shared bus.

Unfortunately, shared bus systems suffer from several drawbacks. For example, since there are multiple devices attached to the shared bus, the bus is typically operated at a relatively low frequency. The multiple attachments present a high capacitive load to a device driving a signal on the bus, and the multiple attach points present a relatively complicated transmission line model for high frequencies. Accordingly, the frequency remains low, and bandwidth available on the shared bus is similarly relatively low. The low bandwidth presents a barrier to attaching additional devices to the shared bus, as performance may be limited by available bandwidth.

Another disadvantage of the shared bus system is a lack of scalability to larger numbers of devices. As mentioned above, the amount of bandwidth is fixed (and may decrease if adding additional devices reduces the operable frequency of the bus). Once the bandwidth requirements of the devices attached to the bus (either directly or indirectly) exceeds the available bandwidth of the bus, devices will frequently be stalled when attempting access to the bus. Overall performance may be decreased.

One or more of the above problems may be addressed using a distributed memory system. A computer system employing a distributed memory system includes multiple nodes. Two or more of the nodes are connected to memory, and the nodes are interconnected using any suitable interconnect. For example, each node may be connected to each other node using dedicated lines. Alternatively, each node may connect to a fixed number of other nodes, and transactions may be routed from a first node to a second node to which the first node is not directly connected via one or more intermediate nodes. The memory address space is assigned across the memories in each node. Generally, a "node" is a device which is capable of participating in transactions upon the interconnect. For example, in a packet-based interconnect the node may be configured to receive and transmit packets to other nodes. One or more packets may be employed to perform a particular transaction. A particular node may be a destination for a packet, in which case the information is accepted by the node and processed internal to the node. Alternatively, the particular node may be used to relay a packet from a source node to a destination node if the particular node is not the destination node of the packet.

Distributed memory systems present design challenges which differ from the challenges in shared bus systems. For example, shared bus systems regulate the initiation of transactions through bus arbitration. Accordingly, a fair arbitration algorithm allows each bus participant the opportunity to initiate transactions. The order of transactions on the bus may represent the order that transactions are performed (e.g. for coherency purposes). On the other hand, in distributed systems, nodes may initiate transactions concurrently and use the interconnect to transmit the transactions to other nodes. These transactions may have logical conflicts between them (e.g. coherency conflicts for transactions to the same address) and may experience resource conflicts (e.g. buffer space may not be available in various nodes) since no central mechanism for regulating the initiation of transactions is provided. Accordingly, it is more difficult to ensure that information continues to propagate among the nodes smoothly and that deadlock situations (in which no transactions are completed due to conflicts between the transactions) are avoided. A method and apparatus for avoiding deadlock in a distributed system is desired. Additionally, it is desired to minimize the apparatus (in terms of hardware) to enhance ease of implementation.

The paper by V.S. Adve and M.K. Vernon 'Performance Analysis of mesh interconnection networks with deterministic routing' INTERNET [Online] 1994, pages 1-40 XP2155424 discloses a method of routing messages among a network of processing nodes using a deadlock-free routing algorithm in which each physical link is shared by two virtual channels that are fed by separate buffers.

The problems outlined above are in large part solved by a computer system employing virtual channels and allocating different resources to the virtual channels as described herein.

According to one aspect of the present invention there is provided a method for routing packets among a plurality of nodes in a computer system, the method being as defined in claim 1.

According to a second aspect of the invention there is provided a computer system as defined in claim 5.

Generally speaking packets which do not have logical/protocol-related conflicts are grouped into a virtual channel. Accordingly, logical conflicts occur between packets in separate virtual channels. The packets within a virtual channel may share resources (and hence experience resource conflicts), but the packets within different virtual channels may not share resources. Since packets which may experience resource conflicts do not experience logical conflicts, and since packets which may experience logical conflicts do not experience resource conflicts, deadlock-free operation may be achieved.

Additionally, each virtual channel is assigned control packet buffers and data packet buffers. Control packets may be substantially smaller in size, and may occur more frequently than data packets. By providing separate buffers, buffer space may be used efficiently. If a control packet which does not specify a data packet is received, no data packet buffer space is allocated. If a control packet which does specify a data packet is received, both control packet buffer space and data packet buffer space is allocated. Since control packets are often smaller than data packets and occur more frequently, more buffer entries may be provided within the control packet buffers than within the data packet buffers without a substantial increase in overall buffer storage. However, packet throughput may be increased.

## BRIEF DESCRIPTION OF DRAWINGS

Other objects and advantages of the invention will become apparent upon reading the following detailed description and upon reference to the accompanying drawings in which:

Fig. 1 is a block diagram of one embodiment of a computer system.

Fig. 2 is a block diagram of one embodiment of two nodes shown in Fig. 1, highlighting one embodiment of the link therebetween.

Fig. 3 is a block diagram illustrating one embodiment of an info packet.

Fig. 4 is a block diagram illustrating one embodiment of a command packet for the coherent link.

Fig. 5 is a block diagram illustrating one embodiment of a response packet for the coherent link.

Fig. 6 is a block diagram illustrating one embodiment of a data packet

Fig. 7 is a table illustrating one embodiment of packet definitions for the coherent link.

Fig. 8 is a block diagram illustrating a pair of virtual channels.

Fig. 9 is a table illustrating one embodiment of a set of virtual channels.

Fig. 10 is a block diagram of one embodiment of a processing node shown in Fig. 1.

Fig. 11 is a block diagram of one embodiment of a packet processing logic shown in Fig. 10.

Fig. 12 is a block diagram illustrating one embodiment of a data buffer pool entry.

Fig. 13 is a block diagram illustrating one embodiment of a response counter pool entry.

Fig. 14 is a flowchart illustrating operation of one embodiment of the packet processing logic shown in Fig. 10 for packet reception.

Fig. 15 is a flowchart illustrating operation of one embodiment of the packet processing logic shown in Fig. 10 for processing command packets.

Fig. 16 is a flowchart illustrating operation of one embodiment of the packet processing logic shown in Fig. 10 for processing a response packet.

Fig. 17 is a flowchart illustrating operation of one embodiment of the packet processing logic shown in Fig. 10 for initiating a packet.

Fig. 18 is a block diagram illustrating one embodiment of an info packet including buffer release fields.

Fig. 19 is a block diagram of one embodiment of an I/O subsystem including a host bridge and a plurality of I/O nodes intercormected via links similar to the interconnection shown in Figs. 1 and 2.

Fig. 20 is a table illustrating one embodiment of packet definitions for the noncoherent link.

Fig. 21 is a block diagram of one embodiment of a command packet for the noncoherent link.

Fig. 22 is a block diagram of one embodiment of a response packet for the noncoherent link

Fig. 23 is a block diagram of one embodiment of an I/O node.

Fig. 24 is a flowchart illustrating operation of one embodiment of the node logic shown in Fig. 23 for packet reception.

Fig. 25 is a flowchart illustrating operation of one embodiment of the node logic shown in Fig. 24 for processing command packets.

Fig. 26 is a flowchart illustrating operation of one embodiment of the node logic shown in Fig. 24 for processing a response packet

Fig. 27 is a flowchart illustrating operation of one embodiment of the node logic shown in Fig. 27 for initiating a packet.

## MODE(S) FOR CARRYING OUT THE INVENTION

### System Overview

Turning now to Fig. 1, one embodiment of a computer system 10 is shown. Other embodiments are possible and contemplated. In the embodiment of Fig. 1, computer system 10 includes several processing nodes 12A, 12B, 12C, and 12D. Each processing node is coupled to a respective memory 14A-14D via a memory controller 16A-16D included within each respective processing node 12A-12D. Additionally, processing nodes 12A-12D include interface logic used to communicate between the processing nodes 12A-12D. For example, processing node 12A includes interface logic 18A for communicating with processing node 12B, interface logic 18B for communicating with processing node 12C, and a third interface logic 18C for communicating with yet another processing node (not shown). Similarly, processing node 12B includes interface logic 18D, 18E, and 18F; processing node 12C includes interface logic 18G, 18H, and 18I; and processing node 12D includes interface logic 18J, 18K, and 18L. Processing node 12D is coupled to communicate with an I/O bridge 20 via interface logic 18L. Other processing nodes may communicate with other I/O bridges in a similar fashion. I/O bridge 20 is coupled to an I/O bus 22.

Processing nodes 12A-12D implement a packet-based link for inter-processing node communication. In the present embodiment, the link is implemented as sets of unidirectional lines (e.g. lines 24A are used to transmit packets from processing node 12A to processing node 12B and lines 24B are used to transmit packets from processing node 12B to processing node 12A). Other sets of lines 24C-24H are used to transmit packets between other processing nodes as illustrated in Fig. 1. The link may be operated in a cache coherent fashion for communication between processing nodes ("the coherent link") or in a noncoherent fashion for communication between a processing node and an I/O bridge (the "noncoherent link"). Furthermore, the noncoherent link may be used as a daisy-chain structure between I/O devices to replace I/O bus 22. The interconnection of two or more nodes via coherent links may be referred to as a "coherent fabric". Similarly, the interconnection of two or more nodes via noncoherent links may be referred to as a "noncoherent fabric". It is noted that a packet to be transmitted from one processing node to another may pass through one or more intermediate nodes. For example, a packet transmitted by processing node 12A to processing node 12D may pass through either processing node 12B or processing node 12C as shown in Fig. 1. Any suitable routing algorithm may be used. Other embodiments of computer system 10 may include more or fewer processing nodes than the embodiment shown in Fig. 1.

Processing nodes 12A-12D, in addition to a memory controller and interface logic, may include one or more processors. Broadly speaking, a processing node comprises at least one processor and may optionally include a memory controller for communicating with a memory and other logic as desired.

Memories 14A-14D may comprise any suitable memory devices. For example, a memory 14A-14D may comprise one or more RAMBUS DRAMs (RDRAMs), synchronous DRAMS (SDRAMs), static RAM, etc. The address space of computer system 10 is divided among memories 14A-14D. Each processing node 12A-12D may include a memory map used to determine which addresses are mapped to which memories 14A-14D, and hence to which processing node 12A-12D a memory request for a particular address should be routed. In one embodiment, the coherency point for an address within computer system 10 is the memory controller 16A-16D coupled to the memory storing bytes corresponding to the address. In other words, the memory controller 16A-16D is responsible for ensuring that each memory access to the corresponding memory 14A-14D occurs in a cache coherent fashion. Memory controllers 16A-16D may comprise control circuitry for interfacing to memories 14A-14D. Additionally, memory controllers 16A-16D may include request queues for queuing memory requests.

Generally, interface logic 18A-18L may comprise buffers for receiving packets from the link and for buffering packets to be transmitted upon the link. Computer system 10 may employ any suitable flow control mechanism for transmitting packets. For example, in one embodiment, each node stores a count of the number of each type of buffer within the receiver at the other end of the link to which each interface logic is connected. The node does not transmit a packet unless the receiving node has a free buffer to store the packet. As a receiving buffer is freed by routing a packet onward, the receiving interface logic transmits a message to the sending interface logic to indicate that the buffer has been freed. Such a mechanism may be referred to as a "coupon-based" system.

Turning next to Fig. 2, a block diagram illustrating processing nodes 12A and 12B is shown to illustrate one embodiment of the links therebetween in more detail. Other embodiments are possible and contemplated. In the embodiment of Fig. 2, lines 24A include a clock line 24AA, a control line 24AB, and a control/address/data bus 24AC. Similarly, lines 24B include a clock line 24BA, a control line 24BB, and a control/address/data bus 24BC.

The clock line transmits a clock signal which indicates a sample point for the control line and the control/address/data bus. In one particular embodiment, data/control bits are transmitted on each edge (i.e. rising edge and falling edge) of the clock signal. Accordingly, two data bits per line may be transmitted per clock cycle. The amount of time employed to transmit one bit per line is referred to herein as a "bit time". The above-mentioned embodiment includes two bit times per clock cycle. A packet may be transmitted across two or more bit times. Multiple clock lines may be used depending upon the width of the controlladdress/data bus. For example, two clock lines may be used for a 32 bit control/address/data bus (with one half of the control/address/data bus referenced to one of the clock lines and the other half of the control/address/data bus and the control line referenced to the other one of the clock lines.

The control line indicates whether or not the data transmitted upon the control/address/data bus is either a bit time of a control packet or a bit time of a data packet. The control line is asserted to indicate a bit time of a control packet, and deasserted to indicate a bit time of a data packet. Certain control packets indicate that a data packet follows. The data packet may immediately follow the corresponding control packet. In one embodiment, other control packets may interrupt the transmission of a data packet. Such an interruption may be performed by asserting the control line for a number of bit times during transmission of the data packet and transmitting the bit times of the control packet while the control line is asserted. Control packets which interrupt a data packet may not indicate that a data packet will be following. Additionally, in one embodiment, the control line may be deasserted during transmission of a control packet to indicate stall bit times. A subsequent reassertion of the control line may indicate that the control packet is continuing.

The control/address/data bus comprises a set of lines for transmitting the data/control bits. In one embodiment, the control/address/data bus may comprise 8, 16, or 32 lines. Each processing node or I/O bridge may employ any one of the supported numbers of lines according to design choice. Other embodiments may support other sizes of control/address/data bus as desired.

According to one embodiment, the command/address/data bus lines and the clock line may carry inverted data (i.e. a logical one is represented as a low voltage on the line, and a logical zero is represented as a high voltage). Alternatively, lines may carry non-inverted data (in which a logical one is represented as a high voltage on the line, and logical zero is represented as a low voltage).

Turning now to Figs. 3-6, exemplary packets employed on one embodiment of the coherent link are shown. Figs. 3-5 illustrate control packets and Fig. 6 illustrates a data packet. Other embodiments may employ different packet definitions, as desired. Each of the packets are illustrated as a series of bit times enumerated under the "bit time" heading. The bit times of the packet are transmitted according to the bit time order listed. Figs. 3-6 illustrate packets for an eight bit control/address/data bus implementation. Accordingly, each bit time comprises eight bits numbered seven through zero. Bits for which no value is provided in the figures may either be reserved for a given packet, or may be used to transmit packet-specific information. Fields indicated by dotted lines indicate optional fields which may not be included in all of the packets of a certain type.

Generally speaking, a packet is a communication between two nodes (an initiating node which transmits the packet and a destination node which receives the packet). The initiating node and the destination node may differ from the source and target node of the transaction of which the packet is a part, or either node may be either the source node or the target node. A control packet is a packet carrying control information regarding the transaction. Certain control packets specify that a data packet follows. The data packet carries data corresponding to the transaction and corresponding to the specifying control packet.

Fig. 3 illustrates an information packet (info packet) 30. Info packet 30 comprises four bit times on an eight bit link. The command encoding is transmitted during bit time one, and comprises six bits in the present embodiment. Each of the other control packets shown in Figs. 4 and 5 include the command encoding in the same bit positions during bit time 1. Info packet 30 may be used to transmit messages between processing nodes when the messages do not include a memory address. Additionally, info packets may be used to transmit buffer free counts using the coupon-based flow control scheme.

Fig. 4 illustrates a command packet 32. Command packet 32 comprises eight bit times on an eight bit link. The command encoding is transmitted during bit time 1. A source unit number is transmitted during bit time 1 as well, and a source node number is transmitted during bit time two. A node number unambiguously identifies one of the processing nodes 12A-12D within computer system 10, and is used to route the packet through computer system 10. The unit number identifies a unit within the node which sourced the transaction (source unit number) or which is the destination of the transaction (destination unit number). Units may include memory controllers, caches, processors, etc. Optionally, command packet 32 may include either a destination node number and destination unit in bit time 2 (or a target node number and target unit, for some other packets). If the destination node number is included, it is used to route the packet to the destination node. Also, many command packets may include a source tag in bit time 3 which, together with the source node and source unit, may link the packet to a particular transaction of which it is a part. Bit times five through eight are used transmit the most significant bits of the memory address affected by the transaction. Command packet 32 may be used to initiate a transaction (e.g. a read or write transaction), as well as to transmit commands in the process of carrying out the transaction for those commands which carry the memory address affected by the transaction. Generally, a command packet indicates an operation to be performed by the destination node.

Some of the undefined fields in packet 32 may be used in various command packets to carry packet-specific information. Furthermore, bit time 4 may be used in some commands to transmit the least significant bits of the memory address affected by the transaction.

Fig. 5 illustrates a response packet 34. Response packet 34 includes the command encoding and a destination node number and destination unit number. The destination node number identifies the destination node for the response packet (which may, in some cases, be the source node or target node of the transaction). The destination unit number identifies the destination unit within the destination node. Various types of response packets may include additional information. For example, a read response packet may indicate the amount of read data provided in a following data packet. Probe responses may indicate whether or not a copy of the requested cache block is being retained by the probed node (using the optional shared bit "Sh" in bit time 4). Generally, response packet 34 is used for commands during the carrying out of a transaction which do not require transmission of the memory address affected by the transaction. Furthermore, response packet 34 may be used to transmit positive acknowledgement packets to terminate a transaction. Similar to the command packet 32, response packet 34 may include the source node number, the source unit number, and the source tag for many types of responses (illustrated as optional fields in Fig. 5).

Fig. 6 illustrates the data packet 36. Data packet 36 includes eight bit times on an eight bit link in the embodiment of Fig. 6. Data packet 36 may comprise different numbers of bit times dependent upon the amount of data being transferred. For example, in one embodiment a cache block comprises 64 bytes and hence 64 bit times on an eight bit link. Other embodiments may define a cache block to be of a different size, as desired. Additionally, data may be transmitted in less than cache block sizes for non-cacheable reads and writes. Data packets for transmitting data less than cache block size employ fewer bit times. In one embodiment, non-cache block sized data packets may transmit several bit times of byte enables prior to transmitting the data to indicate which data bytes are valid within the data packet. Furthermore, cache block data may be returned with the quadword addressed by the least significant bit of the request address first, followed by interleaved return of the remaining quadwords. A quadword may comprise 8 bytes, in one embodiment.

Figs. 3-6 illustrate packets for an eight bit link. Packets for 16 and 32 bit links may be formed by concatenating consecutive bit times illustrated in Figs. 3-6. For example, bit time one of a packet on a 16 bit link may comprise the information transmitted during bit times one and two on the eight bit link. Similarly, bit time one of the packet on a 32 bit link may comprise the information transmitted during bit times one through four on the eight bit link. Formulas 1 and 2 below illustrate the formation of bit time one of a 16 bit link and bit time one of a 32 bit link according to bit times from an eight bit link.

$$BT1_{16}[15:0] = BT2_8[7:0] \| BT1_8[7:0] \qquad (1)$$

$$BT1_{32}[31:0] = BT4_8[7:0] \| BT3_8[7:0] \| BT2_8[7:0] \| BT1_8[7:0] \qquad (2)$$

Turning now to Fig. 7, a table 38 is shown illustrating packets employed according to one exemplary embodiment of the coherent link within computer system 10. Other embodiments are possible and contemplated, including any other suitable set of packets and command field encodings. Table 38 includes a command code column illustrating the command encodings assigned to each command, a command column naming the command, and a packet type column indicating which of command packets 30-34 (and data packet 36, where specified) is employed for that command.

A read transaction is initiated using one of the ReadSized, RdBlk, RdBlkS or RdBlkMod commands. The ReadSized command is used for non-cacheable reads or reads of data other than a cache block in size. The amount of data to be read is encoded into the ReadSized command packet. For reads of a cache block, the RdBlk command may be used unless: (i) a writeable copy of the cache block is desired, in which case the RdBlkMod command may be used; or (ii) a copy of the cache block is desired but no intention to modify the block is known, in which case the RdBlkS command may be used. The RdBlkS command may be used to make certain types of coherency schemes (e.g. directory-based coherency schemes) more efficient. In general, the appropriate read command is transmitted from the source initiating the transaction to a target node which owns the memory corresponding to the cache block. The memory controller in the target node transmits Probe commands (indicating return of probe responses to the source of the transactions) to the other nodes in the system to maintain coherency by changing the state of the cache block in those nodes and by causing a node including an updated copy of the cache block to send the cache block to the source node. Each node receiving a Probe command transmits a ProbeResp response packet to the source node. If a probed node has an updated copy of the read data (i.e. dirty data), that node transmits a RdResponse response packet and the dirty data. A node transmitting dirty data may also transmit a MemCancel response packet to the target node in an attempt to cancel transmission by the target node of the requested read data. Additionally, the memory controller in the target node transmits the requested read data using a RdResponse response packet followed by the data in a data packet. If the source node receives a RdResponse response packet from a probed node, that read data is used.

Otherwise, the data from the target node is used. Once each of the probe responses and the read data is received in the source node, the source node transmits a SrcDone response packet to the target node as a positive acknowledgement of the termination of the transaction.

A write transaction is initiated using a WrSized or VicBlk command followed by a corresponding data packet. The WrSized command is used for non-cacheable writes or writes of data other than a cache block in size. To maintain coherency for WrSized commands, the memory controller in the target node transmits Probe commands (indicating return of probe response to the target node of the transaction) to each of the other nodes in the system. In response to Probe commands, each probed node transmits a ProbeResp response packet to the target node. If a probed node is storing dirty data, the probed node responds with a RdResponse response packet and the dirty data. In this manner, a cache block updated by the WrSized command is returned to the memory controller for merging with the data provided by the WrSized command. The memory controller, upon receiving probe responses from each of the probed nodes, transmits a TgtDone response packet to the source node to provide a positive acknowledgement of the termination of the transaction. The source node replies with a SrcDone response packet.

A victim cache block which has been modified by a node and is being replaced in a cache within the node is transmitted back to memory using the VicBlk command. Probes are not needed for the VicBlk command. Accordingly, when the target memory controller is prepared to commit victim block data to memory, the target memory controller transmits a TgtDone response packet to the source node of the victim block. The source node replies with either a SrcDone response packet to indicate that the data should be committed or a MemCancel response packet to indicate that the data has been invalidated between transmission of the VicBlk command and receipt of the TgtDone response packet (e.g. in response to an intervening probe).

The ChangetoDirty command packet may be transmitted by a source node in order to obtain write permission for a cache block stored by the source node in a non-writeable state. A transaction initiated with a ChangetoDirty command may operate similar to a read except that the target node does not return data. The ValidateBlk command may be used to obtain write permission to a cache block not stored by a source node if the source node intends to update the entire cache block. No data is transferred to the source node for such a transaction, but otherwise operates similar to a read transaction.

The Nop info packet is a no-operation packet which may be used, e.g. to transfer buffer free indications between nodes. The Broadcast command may be used to broadcast messages between nodes (e.g., the broadcast command may be used to distribute interrupts). Finally, the sync info packet may be used for cases in which synchronization of the fabric is desired (e.g. error detection, reset, initialization, etc.).

Table 38 also includes a virtual channel column (Vchan). The virtual channel column indicates the virtual channel in which each packet travels (i.e. to which each packet belongs). In the present embodiment, three virtual channels are defined: commands (C), responses (R), and probes (P). Virtual channels will now be described in more detail. It is noted that info packets are used to communicate between adjacent nodes, and hence may not be assigned to virtual channels in the present embodiment.

## Virtual Channels

Turning next to Fig. 8, a block diagram is shown to illustrate virtual channels. In Fig. 8, two virtual channels are shown (virtual channels 40A and 40B). Each of processing nodes 12A-12D is coupled to virtual channels 40A-40B. Two virtual channels are shown in Fig. 8 for illustrative purposes only. Other embodiments may employ any suitable number of virtual channels. For example, an embodiment of computer system 10 may employ four virtual channels as illustrated in Fig. 9 below.

Generally speaking, a "virtual channel" is a communication path for carrying packets between various processing nodes. Each virtual channel is resource-independent of the other virtual channels (i.e. packets flowing in one virtual channel are generally not affected, in terms of physical transmission, by the presence or absence of packets in another virtual channel). Packets are assigned to a virtual channel based upon packet type. Packets in the same virtual channel may physically conflict with each other's transmission (i.e. packets in the same virtual channel may experience resource conflicts), but may not physically conflict with the transmission of packets in a different virtual channel.

Certain packets may logically conflict with other packets (i.e. for protocol reasons, coherency reasons, or other such reasons, one packet may logically conflict with another packet). If a first packet, for logical/protocol reasons, must arrive at its destination node before a second packet arrives at its destination node, it is possible that a computer system could deadlock if the second packet physically blocks the first packet's transmission (by occupying conflicting resources). By assigning the first and second packets to separate virtual channels, and by implementing the transmission medium within the computer system such that packets in separate virtual channels cannot block each other's transmission, deadlock-free operation may be achieved. It is noted that the packets from different virtual channels are transmitted over the same physical links (e.g. lines 24 in Fig. 1). However, since a receiving buffer is available prior to transmission, the virtual channels do not block each other even while using this shared resource.

From one viewpoint, each different packet type (e.g. each different command encoding) could be assigned to its own virtual channel. However, the hardware to ensure that virtual channels are physically conflict-free may increase with the number of virtual channels. For example, in one embodiment, separate buffers are allocated to each virtual channel. Since separate buffers are used for each virtual channel, packets from one virtual channel do not physically conflict with packets from another virtual channel (since such packets would be placed in the other buffers). However, the number of buffers is proportional to the number of virtual channels. Accordingly, it is desirable to reduce the number of virtual channels by combining various packet types which do not conflict in a logical/protocol fashion. While such packets may physically conflict with each other when travelling in the same virtual channel, their lack of logical conflict allows for the resource conflict to be resolved without deadlock. Similarly, keeping packets which may logically conflict with each other in separate virtual channels provides for no resource conflict between the packets. Accordingly, the logical conflict may be resolved through the lack of resource conflict between the packets by allowing the packet which is to be completed first to make progress.

In one embodiment, packets travelling within a particular virtual channel on the coherent link from a particular source node to a particular destination node remain in order. However, packets from the particular source node to the particular destination node which travel in different virtual channels are not ordered. Similarly, packets from the particular source node to different destination nodes, or from different source nodes to the same destination node, are not ordered (even if travelling in the same virtual channel).

The virtual channels are physically mapped onto the coherent fabric and onto the noncoherent fabric (see Fig. 19). For example, in the embodiment of computer system 10 shown in Fig. 1, the interconnect includes unidirectional links between each node. Accordingly, packets travelling in the various virtual channels are physically transmitted on the unidirectional links. Packets may travel through intermediate nodes between the source and the destination. For example, packets travelling from node 12A to node 12D may pass through node 12B and 12C. Packets travelling in different virtual channels may be routed through computer system 10 differently. For example, packets travelling in a first virtual channel from node 12A to node 12D may pass through node 12B, while packets travelling in a second virtual channel from node 12A to node 12D may pass through node 12C. Each node includes circuitry to ensure that packets in different virtual channels do not physically conflict with each other. In the noncoherent fabric, packets from an I/O node may pass through each other I/O node between that I/O node and the host bridge (see Fig. 19). It is noted that the I/O nodes may be coupled to the virtual channels in a similar fashion to that shown in Fig. 8.

In one particular embodiment described in more detail below, control packet buffers are assigned to each virtual channel to buffer control packets travelling in that virtual channel. Separate data packet buffers may also be assigned to each virtual channel which may carry data packets. By separating control packet buffers (each entry of which may comprise a relatively small number of bit times) and data packet buffers (each entry of which may comprise a relatively large number of bit times to hold a cache block), buffer space may be saved while still providing suitable data storage. More control packet buffers may be implemented than data packet buffers (since all data packets have a corresponding control packet but not all control packets have a corresponding data packet). Throughput may be high while making relatively efficient use of the buffer space.

Fig. 9 is a table 42 illustrating the virtual channels defined according to one embodiment of computer system 10. Other embodiments are possible and contemplated. For the embodiment shown, three virtual channels are defined. The packets which belong to those virtual channels for the coherent link are shown in Fig. 7, and the packets which belong to those virtual channels for the noncoherent link are shown in Fig. 20.

The command virtual channel is used for command packets (and corresponding data packets). Generally, commands initiate transactions, and hence a command does not cause the transmission of additional command packets. Furthermore, the various command packets do not have a logical/protocol conflict with each other since there is no order between them until they reach the destination (the target of the transaction). Accordingly, command packets may be included in one virtual channel.

Commands may cause the generation of probe command packets (to maintain coherency in the coherent fabric) and response packets (to transfer data and provide positive acknowledgement of transactions). Accordingly, probe packets and response packets are not included in the same virtual channel as the commands (to prevent resource conflicts and logical conflicts from creating a deadlock). Furthermore, probe packets may cause the generation of probe response and read response packets, and thus are placed in a separate virtual channel from response packets.

Response packets may also generate additional response packets (for example, SrcDone and TgtDone may cause each other to be generated). Therefore, it is possible that response packets could create logical conflicts with other response packets by placing them in the same virtual channel. However, providing multiple response virtual channels may be undesirable due to the increased resource requirements (e.g. buffers) to handle the additional virtual channels. Response packets are the result, either directly or indirectly (e.g. via a probe generated in response to a command packet), of a command packet. Nodes 12A-12D (and I/O nodes shown below) are configured to allocate, prior to initiating a transaction with a command packet, to allocate sufficient resources for processing the response packets (including any response data packets) which may be generated during that transaction. Similarly, prior to generating a probe command packet, a node is configured to allocate sufficient resources for processing the probe response packets (if the response packets will be returned to that node). In this manner, all response packets are accepted by the destination node. Accordingly, the response packets may be merged into one response virtual channel. Response packets (and corresponding data packets) travel in the response virtual channel.

Finally, probe command packets travel in the probe virtual channel. Probes are used to maintain coherency between various cached copies of a memory location and the memory location itself. Coherency activities corresponding to a first command packet being processed by a memory controller may need to be completed before subsequent command packets may be processed. For example, if the memory controller's queue were full of commands to the same cache block, no additional processing of command packets would occur at the memory controller until completion of the first command. Accordingly, the probe command packets (and responses) are provided separate virtual channels to ensure that resource conflicts with packets in other virtual channels do not block the probe command packets.

Table 42 also indicates which form of the links in computer system 10 (coherent links between coherent nodes and non-coherent links between non-coherent nodes) to which the virtual channels are applicable. Non-coherent and coherent links both support the command and response virtual channels. Non-coherent links do not support coherency (which probe command packets are used to ensure), and therefore may not support the probe virtual channel.

<u>Virtual Channels -- Coherent Fabric</u>

Turning now to Fig. 10, a block diagram of one embodiment of an exemplary processing node 12A is shown. Other processing nodes 12B-12D may be configured similarly. Other embodiments are possible and contemplated. In the embodiment of Fig. 10, processing node 12A includes interface logic 18A, 18B, and 18C and memory controller 16A. Additionally, processing node 12A includes a processor core 52 and a cache 50, packet processing logic 58, and may optionally include a second processor core 56 and a second cache 54. Interface logic 18A-18C are coupled to packet processing logic 58. Processor cores 52 and 56 are coupled to caches 50 and 54, respectively. Caches 50 and 54 are coupled to packet processing logic 58. Packet processing logic 58 is coupled to memory controller 16A.

Generally, packet processing logic 58 is configured to respond to control packets received on the links to which processing node 12A is coupled, to generate control packets in response to caches 50 and 54 and/or processor cores 52 and 56, to generate probe commands and response packets in response to transactions selected by memory controller 16A for service, and to route packets for which node 12A is an intermediate node to another of interface logic 18A-18C for transmission to another node. Interface logic 18A, 18B, and 18C may include logic to receive packets and synchronize the packets to the internal clock used by packet processing logic 58.

Packet processing logic 58 may include the hardware to support resource independence of the virtual channels supported by computer system 10. For example, packet processing logic 58 may provide separate buffers for each virtual channel. An exemplary embodiment is illustrated below as Fig. 11. Alternative embodiments may provide the hardware for providing resource independence of the virtual channels within interface logic 18A-18C, or any other suitable location.

Caches 50 and 54 comprise high speed cache memories configured to store cache blocks of data. Caches 50 and 54 may be integrated within respective processor cores 52 and 56. Alternatively, caches 50 and 54 may be coupled to processor cores 52 and 56 in a backside cache configuration or an in-line configuration, as desired. Still further, caches 50 and 54 may be implemented as a hierarchy of caches. Caches which are nearer processor cores 52 and 56 (within the hierarchy) may be integrated into processor cores 52 and 56, if desired.

Processor cores 52 and 56 include the circuitry for executing instructions according to a predefined instruction set. For example, the x86 instruction set architecture may be selected. Alternatively, the Alpha, PowerPC, or any other instruction set architecture may be selected. Generally, the processor cores access the caches for data and instructions. If a cache miss is detected, a read request is generated and transmitted to the memory controller within the node to which the missing cache block is mapped.

Turning now to Fig. 11, a block diagram of one embodiment of packet processing logic 58 is shown. Other embodiments are possible and contemplated. In the embodiment of Fig. 11, packet processing logic 58 includes a first set of control and data packet buffers 60, a second set of control and data packet buffers 62, a third set of control and data packet buffers 64, control logic 66, a data buffer pool 68, and a response counter pool 70. Control and data packet buffers 60 include a command buffer (CB) 60A, a response buffer (RB) 60B, a probe buffer (PB) 60C, a command data buffer (CDB) 60D and a response data buffer (RDB) 60E. Similarly, control and data packet buffers 62 include a command buffer (CB) 62A, a response buffer (RB) 62B, a probe buffer (PB) 62C, a command data buffer (CDB) 62D and a response data buffer (RDB) 62E. Control and data packet buffers 64 include a command buffer (CB) 64A, a response buffer (RB) 64B, a probe buffer (PB) 64D, a command data buffer (CDB) 64D and a response data buffer (RDB) 64E. Control and data packet buffers 60 are coupled to receive packets received by interface logic 18A (e.g. on lines 24B). Similarly, control and data packet buffers 62 are coupled to receive packets received by interface logic 18B and control and data packet buffers 64 are coupled to receive packets received by interface logic 18C. Control and data packet buffers 60, 62, and 64 are coupled to control logic 66. Additionally, response data buffers 60E, 62E, and 64E are coupled to data buffer pool 68. Data buffer pool 68 and response counter pool 70 are coupled to control logic 66, which further includes a node ID register 72, control packet active registers 74A-74C and data packet active register 76A-76C. Control logic 66 is coupled to interfaces 18A-18C via a receive and transmit interface, and is coupled to memory controller 16A and cache 50 (and optional cache 54) as well. Data buffer pool 68 is further coupled to memory controller 16A and cache 50 (and optional cache 54).

Each set of control and data packet buffers provides different buffers for each of the virtual channels. Namely, in the present embodiment, command buffer 60A is assigned to the command virtual channel, response buffer 60B is assigned to the response virtual channel, and probe buffer 60E is assigned to the probe virtual channel. In this manner, receipt of control packets in one virtual channel is not impeded by receipt of control packets in another virtual channel. Control packets from each virtual channel are stored into the control packet buffer corresponding to that virtual channel, and hence do not physically conflict with control packets from another virtual channel (which are stored in a different control packet buffer). Similarly named buffers within buffers 62 and 64 are assigned to the virtual channels as described above.

Similarly, data packet buffers are provided for each virtual channel which carries data packets (the probe virtual channel does not carry data packets in the present embodiment). Namely, in the present embodiment, command data buffer 60D is assigned to the command virtual channel and response data buffer 60E is assigned to the response virtual channel. Similarly named buffers within buffers 62 and 64 are assigned to the virtual channels as described above.

In the present embodiment, interface logic 18A-18C is configured to divide received packets into control packets (provided on the control path) and data packets (provided on the data path). The control path is coupled to the control packet buffers (e.g. buffers 60A-60C are coupled to the control path from interface logic 18A), and the data path is coupled to the data packet buffers (e.g. buffers 60D-60E are coupled to the data path from interface logic 18A). Control logic 66 is coupled to receive an indication of the packet via the receive and transmit interface, and is configured to allocate a buffer entry for the packet being received. In other contemplated embodiments, the received packets are not divided into control and data packets by the interface logic. In such embodiments, control logic 66 may receive the CTL signal to distinguish bit times of data packets and bit times of control packets.

Generally, control logic 66 is configured to process packets from the various buffers independent of the packets in the other buffers. Accordingly, packets travelling in different virtual channels do not physically conflict with each other.

Control logic 66 examines control packets within buffers 60, 62, and 64 to determine if the control packets are destined for node 12A ("this node") or are to be forwarded to another node. Node ID register 72 stores the node ID of this node, and control logic 66 may use the Node ID to determine whether or not control packets are destined for this node. In the present embodiment, packets in the probe virtual channel are broadcast packets and hence are destined for this node and for other nodes to which this node is to transmit the packet (and thus a node ID comparison is not used). Packets in the other virtual channels are directed packets for which the destination node field identifies whether the packet is destined for this node or is to be forwarded to another node. Control logic 66 may include one or more routing tables which indicate, for each destination node, which of the interface logic 18A-18C is to be used to forward the packet. Control logic 66 may forward the control packet when the receiving node coupled to receive packets transmitted via the identified interface logic 18A-18C has a free control packet buffer for the virtual channel corresponding to the control packet. Additionally, if the control packet specifies a data packet, a free data packet buffer for the virtual channel corresponding to the control packet is identified before forwarding the control packet followed by the specified data packet. Control logic 66 determines if the control packet (and the data packet, if specified) is to be forwarded and forwards the packet using the receive and transmit interface to the identified interface logic 18A-18C, which subsequently forwards the packet to the receiving node. Also, control logic 66 notes that a buffer of the corresponding type has been freed, so that a subsequent info packet may be transmitted via the interface 18A-18C upon which the packet was received by node 12A to indicate the freed buffer to the transmitting node on the receiving interface.

On the other hand, if the control packet is destined for this node, control logic 66 processes the packet based upon the type of packet. For example, if the control packet is a command targeted at the memory controller 16A, control logic 66 attempts to convey the control packet to memory controller 16A. Memory controller 16A may employ queues for transactions to be processed, and may refuse a control packet if the queues are full, for example. To process probe packets, control logic 66 may communicate with caches 50 and 54 (and any caches internal to the processor cores 52 and 56) to determine the status of the addressed cache block. Control logic 66 may generate a probe response packet with the status (or a read response packet with the data, if the cache block is modified within the node) and transmit the probe response packet (subject to receiving node buffers being available).

In addition to processing received packets, control logic 66 may generate packets in response to fill requests and victim blocks from the caches 50 and 54, as well as packets in response to requests directly from processor cores 52 and 56 (e.g. noncacheable requests, I/O requests, etc.). Still further, response packets may be generated in response to the memory controller providing data for transmission or completing a transaction. Control logic 66 may generate a probe command packet in response to memory controller 16A selecting a corresponding command for processing, and may broadcast the probe command packet (subject to receiving node buffers being available, as with other packet transmissions).

As mentioned above, a node provides sufficient resources to process response packets corresponding to a control packet generated by that node. In the present embodiment, control logic 66 may generate packets which may result in response packets being returned to the node in two cases: (i) when generating a command packet to initiate a transaction (e.g. in response to requests from caches 50 and 54 or processor cores 52 and 56); and (ii) when generating a probe packet for a control packet targeting memory controller 16A. More particularly, case (ii) may occur for sized writes targeting memory controller 16A. In either case, control logic 66 allocates resources to provide for processing of the response packets.

In the present embodiment, control logic 66 may allocate resources from data buffer pool 68 and response counter pool 70 for processing responses. Data buffer pool 68 may include a plurality of entries for storing cache blocks of data, while response counter pool 70 may comprise a plurality of counters. A data buffer pool entry may be allocated to store response data corresponding to the transaction. A counter may be allocated to count the responses received (and retain any state information which may be provided in the probe responses). Response packets may be counted (until the expected number of responses is reached) using the allocated counter, and data received with a response packet may be stored in the allocated data buffer. It is noted that, at most, two response packets involved in a transaction may carry data (one from the targeted memory controller, if the MemCancel response packet does not reach the memory controller prior to transmission of the response packet, and one from a probed node which had a modified cached copy of the data). In the case in which two data packets are received, the packet from the probed node is retained and the packet from the memory controller is discarded.

Once each of the expected responses is received and the response data has been received, control logic 66 may transmit the data to memory controller 16A or caches 50 or 54, depending upon the type of transaction which has been performed. For example, if the responses are probe responses generated in response to a probe command generated by packet processing logic 58, the response data may be transmitted to memory controller 16A. Alternatively, if the responses are due to a read transaction, the data may be transmitted to caches 50 or 54.

It is noted that data buffer pool 68 may be used to store data to be transmitted out of node 12A as well. For example, victim block data or write data for write commands sourced from node 12A may be stored in data buffer pool 68. Alternatively, separate buffers may be provided for this data. Furthermore, instead of providing a pool of buffers which may be used for various transactions, separate buffers may be provided by transaction type, as desired.

As used herein, a buffer is a storage element used to store one or more items of information for later retrieval. The buffer may comprise one or more registers, latches, flip-flops, or other clocked storage devices. Alternatively, the buffer may comprise a suitably arranged set of random access memory (RAM) cells. The buffer is divided into a number of entries, where each entry is designed to store one item of information for which the buffer is designed. Entries may be allocated and deallocated in any suitable fashion. For example, the buffer may be operated as shifting first-in, first-out (FIFO) buffer in which entries are shifted down as older entries are deleted. Alternatively, head and tail pointers may be used to indicate the oldest and youngest entries in the buffer, and entries may remain in a particular storage location of the buffer until deleted therefrom. The term "control logic" as used herein, refers to any combination of combinatorial logic and/or state machines which performs operations on inputs and generates outputs in response thereto in order to effectuate the operations described.

In one particular embodiment, packets are received from interface logic 18A-18B as a series of bit times. Interface logic 18A-18C indicate whether control or data bit times are being transmitted, and control logic 66 causes the appropriate buffers to store the bit times. Control logic 66 may use control packet active registers 74 and data packet active registers 76 to identify which virtual channel a control packet or data packet which is currently being received belongs to. A control packet active register 74 is provided for each interface logic 18A-18C (e.g. control packet active register 74A may correspond to interface 18A). Similarly, a data packet active register 76 is provided for each interface logic 18A-18C (e.g. data packet active register 76A may correspond to interface 18A). In response to the first bit time of a control packet, control logic 66 decodes the command field (which is in the first bit time) and determines to which virtual channel the control packet is assigned. Control logic 66 allocates a buffer entry in the corresponding control packet buffer (within the set corresponding to the interface logic 18A-18C from which the control packet is received) and sets the control packet active register 76 corresponding to the interface logic 18A-18C from which the packet is received to indicate that control packet buffer. Subsequent control packet bit times from the same interface logic 18A-18C are stored into the indicated entry in the indicated buffer until each bit time of the control packet is received. If the control packet specifies a data packet, control logic 66 allocates a data packet buffer entry in the data packet buffer corresponding to the identified virtual channel. Data packet bit times are stored into the indicated entry of the indicated buffer until each bit time of data is received. In an alternative embodiment, interface logic 18A-18C may gather the bit times of a packet and transmit the packet as a whole to packet processing logic 58. In such embodiment, control packet active registers 74 and data packet active registers may be eliminated. In yet another embodiment, interface logic 18A-18C may gather several bit times for concurrent transmission to packet processing logic 58, but the number of bit times may be less than a packet. In still another embodiment, buffers 60, 62, and 64 may be located within the respective interface logic 18A-18C instead of packet processing logic 58.

The embodiment shown in Fig. 11 provides separate sets of buffers for each interface logic 18A-18C. In an alternative embodiment, the buffers may be provided as a pool (of each virtual channel type) which may be divided between the interface logic. Such an embodiment may make efficient use of the buffers by providing zero buffers to interface logic which is not coupled to another node (e.g. interface logic 18C in the example of Fig. 1). The buffers which would otherwise have been allocated to interface logic 18C may be allocated for use by interface logic 18A-18B.

Turning next to Fig. 12, a diagram illustrating one embodiment of a data buffer pool entry 80 which may be within data buffer pool 68 is shown. Other embodiments are possible and contemplated. In the embodiment of Fig. 12, data buffer pool entry 80 includes a source tag field 82, a source node field 84, a source unit field 88, and a data field 86.

When control logic 66 allocates data buffer pool entry 80 to store a response data packet for a transaction, control logic 66 may store the source node, source unit, and source tag of the transaction in the source node field 84, source unit field 88, and the source tag field 82, respectively. Since the source node, source unit, and source tag uniquely identify an outstanding transaction, and the source node, source unit, and source tag are carried by response packets corresponding to the outstanding transaction, the response packets (and corresponding data packets) of the transaction may be identified and the data packet stored into the allocated entry. In other words, when a response packet specifying a response data packet is received, the source node, source unit, and source tag of the response packet may be compared against source node field 84, source unit field 88, and source tag field 84 to locate the data buffer pool entry 80 previously allocated for response data and the data may be copied from the response data buffer into the data field 86 of the data buffer pool entry 80. Data field 86 may comprise a cache block of data.

Turning next to Fig. 13, a diagram illustrating one embodiment of a response counter 90 which may be within response counter pool 70 is shown. Other embodiments are possible and contemplated. In the embodiment of Fig. 13, response counter 90 includes a source tag field 92, a source node field 94, a source unit field 95, a response count field 96, and a receive state field 98.

When control logic 66 allocates response counter 90 to store a response count for a transaction, control logic 66 may store the source node, source unit, and source tag of the transaction in the source node field 94, the source unit field 95, and the source tag field 92, respectively. The source node field 94, source unit field 95, and source tag field 92 may be used similar to the corresponding fields 84, 88, and 82 of the data buffer pool entry 80.

Response count field 96 may be initialized, upon allocation to a transaction, to the number of responses expected for that transaction. As response packets having the source node, source unit, and source tag stored in fields 94, 95, and 92, respectively, are received, the response count may be decremented. When the response count reaches zero, all responses have been received and the transaction may be committed. Alternatively, the count may be initialized to zero and the response packets may cause increment of the response count until the expected number of response are received.

Receive state field 98 may be used to indicate the state that the data may be received in. The state indicates the access rights to the cache block, as well as the responsibilities for maintaining coherency for the cache block, that node 12A acquired in receiving the cache block. For example, the MOESI (Modified, Owned, Exclusive, Shared, and Invalid) coherency states may be employed and receive state field 98 may be encoded to one of the supported states. Alternatively, any other suitable set of coherency states may be employed (e.g. the MESI states). Receive state field 98 may be initialized to the state which would be acquired if no other node has a copy of the cache block being transferred by the transaction. As probe responses are received, if a response indicates that a copy of the cache block is being maintained by the probe node or that dirty data is being provided, receive state field 98 may be updated accordingly. In one embodiment, a shared bit may be included in the probe response packet to indicate that a copy of the cache block is being maintained by the probed node providing the probe response. Additionally, receiving a read response packet from a probed node may indicate that the node had a dirty copy of the cache block. The read response packet may also include the shared bit to indicate whether or not a copy is being maintained by the probed node.

It is noted that data buffer pool 68 and response counter pool 70 are only one example of allocating resources to handle responses for outstanding transactions. In another embodiment, a table of outstanding transactions may be maintained. The table may include the source node, source unit, source tag, data, receive state, and response count similar to the above (or equivalent information allowing control logic 66 to determine that all responses have been received). Any suitable set of resources may be used.

Turning now to Fig. 14, a flowchart is shown illustrating operation of one embodiment of packet processing logic 58 for receiving a packet. Other embodiments are possible and contemplated. The embodiment illustrated receives packets into packet processing logic 58 as a series of bit times. Other embodiments may accumulate the bit times of a packet in interface logic 18A-18C and provide the complete packets to packet processing logic 58, in which cases steps related to managing the receipt of packets in bit times may be eliminated. While the steps shown in Fig. 14 are illustrated in a particular order for ease of understanding, any suitable order may be used. Additionally, steps may be performed in parallel using combinatorial logic within packet processing logic 58. The steps illustrated in Fig. 14 may be performed in parallel and independently for each interface logic 18A-18C, since bit times may be received concurrently from each interface logic.

Packet processing logic 58 receives a signal from the interface logic indicating whether the received bit time is part of a data packet or a command packet. If the bit time is a data packet bit time (decision block 100), the bit time is stored in the data buffer (and entry within the data buffer) indicated by the data packet active register corresponding to that interface logic (step 102). If the data packet bit time is the last bit time of the data packet, control logic 66 may invalidate the corresponding data packet active register. On the other hand, if the bit time is a control packet bit time, packet processing logic 58 determines if a control packet is currently in progress of being received (e.g., if the control packet active register is valid, decision block 104). If a control packet is currently in progress, the bit time is stored in the control packet buffer indicated by the control packet active register (step 106). If the control packet bit time is the last bit time of the control packet, control logic 66 may invalidate the corresponding control packet active register.

Alternatively, a control packet may not be currently in progress. In this case, packet processing logic 58 decodes the command field of the newly received control packet to identify the virtual channel to which the control packet belongs (step 108). A control packet buffer entry corresponding to the identified virtual channel is allocated, and the control packet bit time is stored into the allocated control packet buffer entry.

Additionally, packet processing logic 58 determines if the control packet specifies a subsequent data packet (decision block 110). If a data packet is specified, packet processing logic 58 assigns a data buffer entry from the data buffer corresponding to the identified virtual channel and updates the data packet active register to indicate that data buffer (and entry) (step 112).

Turning now to Fig. 15, a flowchart is shown illustrating operation of one embodiment of packet processing logic 58 for processing a command packet. Other embodiments are possible and contemplated. While the steps shown in Fig. 15 are illustrated in a particular order for ease of understanding, any suitable order may be used. Additionally, steps may be performed in parallel using combinatorial logic within packet processing logic 58. The steps illustrated in Fig. 15 may be performed in parallel and independently for each interface logic 18A-18C and/or each command packet buffer, since command packets from different interfaces and/or different virtual channels are physically independent. Alternatively, one command packet (or one command packet per interface logic 18A-18C) may be selected for processing according to a suitable fairness algorithm. Generally, packets selected from one virtual channel for processing obey the ordering rules for packets within a virtual channel (e.g. packets from the same source to the same destination are selected in order) but packets may be selected for processing out of order, if desired and the ordering rules allow such selection.

Packet processing logic 58 determines if the target of the command packet is this node (decision block 126). For example, packet processing logic 58 may compare the destination node recorded in the destination node field of the command packet to the node ID stored in node ID register 72. If the nodes match, then the command is targeted at this node. If the command is not targeted at this node, packet processing logic 58 may forward the command packet (and corresponding data packet, if specified) in response to the destination node (step 128). For example, packet processing logic 58 may maintain packet routing tables which identify one of interface logic 18A-18C as the transmitting interface to forward packets to a particular destination node. Packet processing logic 58 forwards the command packet subject to a corresponding command buffer (and data buffer, if a data packet is specified) being available in the receiving node coupled to the link specified by the packet routing table. Additionally, if the command packet specifies a data packet, the forwarding of the command packet may be stalled if a data packet on the transmitting link is active but has not yet been transmitted.

If the command packet is targeted at this node, packet processing logic 58 may provide the command packet (and corresponding data packet, if applicable) to memory controller 16A (step 130). It is noted that, once the command packet is processed (either forwarded or accepted by this node), the command packet is removed from the command buffer entry (and the data is removed from the command data buffer entry, if applicable).

It is noted that probe commands may be processed in a similar fashion, although probe commands do not specify a subsequent data packet and thus the checks for data packet may be ignored. Furthermore, the probes may be both processed internally (e.g. by probing caches within the node) and forwarded, since they are broadcast packets. The node may generate and transmit a probe response packet after probing the caches.

It is noted that, if a selected command packet specifies a corresponding data packet, various embodiments may process the command packet even if the data packet has not yet been received, or may await arrival of the data packet to simplify forwarding of the data or to allow another control packet which specifies a data packet which is complete to be forwarded on the same link. If the data packet has not been received when the command packet is processed, the data packet may be handled as described above when the data packet is received.

Turning now to Fig. 16, a flowchart is shown illustrating operation of one embodiment of packet processing logic 58 for processing a response packet. Other embodiments are possible and contemplated. While the steps shown in Fig. 16 are illustrated in a particular order for ease of understanding, any suitable order may be used. Additionally, steps may be performed in parallel using combinatorial logic within packet processing logic 58. The steps illustrated in Fig. 16 may be performed in parallel and independently for each interface logic 18A-18C and/or each response packet buffer, since command packets from different interfaces and/or different virtual channels are physically independent.

Packet processing logic 58 determines if the destination node of the response packet is this node (decision block 144). If the destination node is another node, packet processing logic 58 forwards the response packet (and corresponding data packet, if applicable) subject to a free buffer entry for the response virtual channel in the receiver on the link to which the response packet is forwarded (step 146).

If the destination node of the response packet is this node, packet processing logic 58 is configured to decrement the corresponding response counter and update the received state, if the response is a probe response indicating that the received state should be changed from the default state (step 148). Additionally, if the response packet specifies a data packet, the data packet is moved from the corresponding response data buffer to the data buffer allocated to that response (step 150).

After decrementing the counter, packet processing logic may test the counter to determine if all the response packets have been received and processed (decision block 152). If the determination is that all the response packets have been received and processed, packet processing logic 58 may inform memory controller 16A or caches 50 and 54 that they may complete the command, and provide the associated data from the data buffer and received state from the response counter (if applicable -- step 154). It is noted that, once the response packet is processed (either forwarded or accepted by this node), the response packet is removed from the response buffer entry (and response data buffer entry, if applicable).

In the above discussions, the term "suspension" of processing of a command packet or response packet has been used. Generally, the processing is "suspended" if the processing of that particular packet is stopped until the reason for suspension is eliminated. Other packets of the same type may be processed during the time that the suspension of processing of that command or response.

It is noted that, if a selected response packet specifies a corresponding data packet, various embodiments may process the response packet even if the data packet has not yet been received (i.e. the data packet is not yet in the data buffer), or may await arrival of the data packet to simplify forwarding of the data or to allow another control packet which specifies a data packet which is complete to be forwarded on the same link. If the data packet has not been received when the response packet is processed, the data packet may be handled as described above when the data packet is received.

Turning now to Fig. 17, a flowchart is shown illustrating operation of one embodiment of packet processing logic 58 for initiating a packet on the links to which the node is coupled. Other embodiments are possible and contemplated. While the steps shown in Fig. 17 are illustrated in a particular order for ease of understanding, any suitable order may be used. Additionally, steps may be performed in parallel using combinatorial logic within packet processing logic 58. Packet processing logic 58 may initiate packets on the link in response to fill requests/victim blocks from the caches 50 and 54 and/or operations performed by cores 52 and 56. Additionally, probe packets may be initiated in response to the memory controller 16A selecting a memory operation for processing. Response packets may be initiated after probes have been processed, and in response to a transaction sourced by this node or targeted at this node being completed.

Packet processing logic 58 determines if the packet to be initiated may result in data being return to this node (decision block 160). For example, read transactions initiated by the node cause data to be returned to the node, while write transactions initiated by the node do not cause data to be returned to the node. ChangetoDirty transactions may result in data being returned to the node (if another node has the affected cache block in a dirty state). Similarly, probe packets may cause data to be returned to this node if another node has the affected cache block in a dirty state and the probe responses are to be directed at this node. If the transaction may result in data being returned to this node, packet processing logic 58 allocates a data buffer from data buffer pool 68 (step 162).

Additionally, packet processing logic 58 determines if probe responses will be returned to this node in response to the packet (step 166). This may occur if the packet is a probe, or if the packet is initiating a transaction resulting in probe responses to this node (e.g. a read transaction). If probe responses will be returned to this node, packet processing logic 58 allocates a response counter for responses to the transaction and initializes the response counter to the number of nodes in the coherent fabric (step 168).

Packet processing logic 58 further determines if other responses will be returned to this node (e.g. SrcDone, TgtDone, etc.) in response to the packet being initiated (step 164). If such other responses are to be returned, packet processing logic 58 allocates a response counter and sets the initial count to one (step 165). Subsequently, packet processing logic 58 transmits the packet (step 170).

By preallocating resources to handle response packets (including data) prior to initiating a transaction, response packets are processable upon receipt. Accordingly, even though some response packets may have logical/protocol conflicts with other response packets, response packets may be merged into the response virtual channel because physical conflicts may be eliminated by processing each response packet as it reaches its destination node.

Turning next to Fig. 18, a block diagram illustrating one embodiment of an info packet 180 including buffer release fields is shown. Other embodiments are possible and contemplated. A buffer release field is included for each buffer type. The RespData field corresponds to the response data buffer. The Response field corresponds to the response buffer. Similarly, the CmdData field corresponds to the command data buffer and the Cmd field corresponds to the command buffer. The Probe field corresponds to the probe buffer.

Each of the buffer release fields includes two bits, allowing for zero to three of each type of buffer to be freed in the transmission of one info packet 180 from a transmitter to a receiver on a single link. More than three entries may be provided in a buffer, and multiple info packets may be used to free more than three of one type. Packet processing logic 58 may include buffer counts for each type of buffer and each interface logic 18A-18C, indicating the total number of buffers of each type which are provided by the receiver on the other end of the link to which each interface is coupled. These counters may be initialized at power up by transmitting info packets from the receiver to the transmitter with the buffer release fields set to the number of buffers available in that receiver. More than three entries may be indicated by sending multiple info packets.

Packet processing logic 58 may transmit packets in a given virtual channel as long as a buffer of the corresponding type (and a data buffer, if the packet specifies a data packet) is available in the receiver to which the packets are being transmitted. Additionally, packet processing logic 58 notes the number of buffers of each type for each interface 18A-18C that are freed in node 12A due to the processing of packets by packet processing logic 58. Periodically, packet processing logic 58 transmits an info packet 180 via each interface logic 18A-18C, indicating to the transmitter on that link the number of buffer entries which have been freed by packet processing logic 58.

Virtual Channels -- Noncoherent Fabric

Turning now to Fig. 19, a block diagram of one embodiment of an I/O subsystem 200 is shown. Other embodiments are possible and contemplated. In the embodiment of Fig. 19, I/O subsystem 200 includes a host bridge 202 and a plurality of I/O nodes 204A, 204B, and 204C. Host bridge 202 is coupled to processing node 12D via a coherent link comprising lines 24I-24J, and is further coupled to I/O node 204A using a noncoherent link comprising lines 24K-24L. I/O nodes 204A-204C are interconnected using additional noncoherent links in a daisy chain configuration (lines 24N-24O).

Generally, an I/O node 204A-204C may initiate transactions within I/O subsystem 200. The transactions may ultimately be targeted at another I/O node 204A-204C, an I/O node on another noncoherent link, or a memory 14. For simplicity, transactions may be performed between the host bridge 202 and an I/O node 204A-204C despite its actual target. Host bridge 202 may initiate transactions within I/O subsystem 200 on behalf of a request from processing nodes 12A-12D, and may handle transactions initiated by I/O nodes 204A-204C which are targeted at the coherent fabric or another host bridge within the computer system. Accordingly, packets transmitted by an I/O node 204A-204C may flow toward host bridge 202 through the daisy chain connection (flowing "upstream"). Packets transmitted by host bridge 202 may flow toward the receiving I/O node 204A-204N (flowing "downstream"). By interconnecting the I/O nodes and the host bridge in a daisy chain and having I/O nodes communicate (at the transaction level) only with the host bridge provides a logical view of I/O subsystem 200 in which the I/O nodes appear to be connected directly to the host bridge but not the other nodes.

I/O subsystem 200 may be connected to a host bridge on both ends of the daisy chain interconnection to provide for robustness in the event of a link failure or to allow a shared I/O subsystem between clusters of processing nodes. One bridge would be defined as the master bridge and the other would be the slave bridge. In the absence of a link failure, all I/O nodes in the subsystem may belong to the master bridge. Upon detection of a link failure, the nodes on either side of the failure are reprogrammed to belong to the host bridge one the same side of the failure, thereby forming two different subsystems and maintaining communication with the processing nodes. The I/O nodes may be apportioned between the two host bridges in the absence of a failure (forming two logically separate chains) to balance traffic as well.

If a packet reaches the end of the daisy chain (e.g. I/O node 204C in the example of Fig. 19) and no I/O node 204A-204C accepts the packet, an error may be generated by the node at the end of the chain.

Generally, I/O subsystem 200 may implement the links as a noncoherent interconnect. The data packet definition in the noncoherent link may be similar to that shown and described in Fig. 6, and the info packet definition in the non-coherent link may be similar to the packet definitions shown in Figs. 3 and 18 (with the Probe field being reserved). The command and response packets are shown in Figs. 21 and 22 below.

With respect to virtual channels, the noncoherent links may employ the same virtual channels as the coherent link described above. However, since probes are not used in the noncoherent link, the probe virtual channel may be eliminated. Table 42 shown in Fig. 9 illustrates the virtual channels defined for one embodiment of the noncoherent link.

It is noted that, while host node 202 is shown separate from the processing nodes 12, host node 202 may be integrated into a processing node, if desired.

Turning now to Fig. 20, a table 210 is shown illustrating packets employed according to one exemplary embodiment of the noncoherent link within computer system 10. Other embodiments are possible and contemplated, including any other suitable set of packets and command field encodings. Table 210 includes a command code column illustrating the command encodings assigned to each command, a virtual channel (Vchan) column defining the virtual channel to which the noncoherent packets belong, a command column naming the command, and a packet type column indicating which of command packets 30, 212, and 214 is employed for that command.

The Nop, WrSized, ReadSized, RdResponse, TgtDone, Broadcast, and Sync packets may be similar to the corresponding coherent packets described with respect to Fig. 7. However, in the noncoherent link, neither probe packets nor probe response packets are issued.

The Assign and AssignAck packets are used to assign Unit IDs to nodes. The master host bridge transmits assign packets to each node (one at a time) and indicates the last used Unit ID. The receiving node assigns the number of Unit IDs required by that node, starting at the last used Unit ID + 1. The receiving node returns the AssignAck packet, including an ID count indicating the number of Unit IDs assigned.

Turning next to Fig. 21, a block diagram of one embodiment of a command packet 212 which may be employed in the noncoherent link is shown. Command packet 212 includes the command field similar to the coherent packet. Additionally, an optional source tag field may be included in bit time 3 (SrcTag), similar to the coherent command packet. The address is included in bit times 5-8 (and optionally in bit time 4 for the least significant address bits). However, instead of a source node, a unit ID is provided.

Unit IDs serve to identify packets as coming from the same logical source (if the unit IDs are equal). However, an I/O node may have multiple unit IDs (for example, if the node includes multiple devices or functions which are logically separate). Accordingly, a node may accept packets having more than one unit ID. Additionally, since packets flow between the host bridge and a node, one of the nodes involved in a packet (the host bridge node) is implied for the packet. Accordingly, a single unit ID may be used in the noncoherent packets. In one embodiment, the unit ID may comprise 5 bits. Unit ID 0 may be assigned to the host bridge, and unit ID 31 may be used for error cases. Accordingly, up to 30 unit IDs may exist in the I/O nodes coupled into one daisy chain.

Additionally, command packet 212 includes a sequence ID field in bit times 1 and 2. The sequence ID field may be used to group a set of two or more command packets from the same unit ID and indicate that the set is ordered. More particularly, if the sequence ID field is zero, a packet is unordered. If the sequence ID field is non-zero, the packet is ordered with respect to other packets having the same sequence ID field value.

Turning next to Fig. 22, a block diagram of one embodiment of a response packet 214 which may be employed in the noncoherent link is shown. Response packet 214 includes the command field, unit ID field, and source tag field similar to the command packet 212. Other bits may be included as desired.

Turning now to Fig. 23, a block diagram illustrating one embodiment of I/O node 204A is shown. Other I/O nodes 204B-204C may be configured similarly. Other embodiments are possible and contemplated. In the embodiment of Fig. 23, I/O node 204A includes interface logic 18M and 18N, a first set of packet buffers 220, a second set of packet buffers 222, and a node logic 224. Interface logic 18M is coupled to lines 24K and 24L, and to packet buffers 220 and node logic 224. Interface logic 18N is coupled to lines 24M and 24N, as well as to packet buffers 222 and node logic 224. Node logic 224 is further coupled to packet buffers 222 and 224.

Interface logic 18M and 18N are configured to receive packets from lines 24L and 24M (respectively) and to transmit packets on lines 24K and 24N (respectively). Similar to the interface logic described above for the coherent link, interface logic 18M and 18N may separate received packets into a control path and a data path. The control path is coupled to the control packet buffers and the data path is coupled to the data packet buffers. Alternatively, the interface logic may not separate received packets into control and data paths and node logic 224 may receive the CTL signal corresponding to each bit time to perform the separation. Similar to the coherent interface, packet buffers 220 and 222 include a command buffer (CB) and a response buffer (RB) for control packets, corresponding to the two virtual channels implemented in the noncoherent link. Additionally, data packet buffers are provided for each virtual channel (namely a command data buffer (CDB) and a response data buffer (RDB)).

Node logic 224 may process packets received into buffers 222 and 224, and may initiate packets in response to peripheral functionality implemented by I/O node 204A. Similar to control logic 66 shown in Fig. 11, node logic 224 may implement control packet active registers 226A and 226B (corresponding to packet buffers 222 and 224, respectively) and data packet active registers 228A and 228B (corresponding to packet buffers 222 and 224, respectively). Additionally, since the noncoherent link operates according to Unit IDs instead of Node IDs, node logic 224 may include one or more Unit ID registers 230A-230N to store the Unit IDs assigned to I/O node 204A. The number of Unit ID register 230A-230N may vary from node to node, according to the number of Unit IDs implemented within that node.

Since packets in different virtual channels are stored in different buffers within I/O node 204A, packets in different virtual channels do not physically conflict with each other. Hence, deadlock free operation may be provided.

Additionally, node logic 224 may preallocate resources to handle response packets and response data (as described above) and hence response packets may be merged into a single virtual channel (as described above). It is noted that node logic 224 may further be configured to transmit and receive Nop packets similar to the packet shown in Fig. 18 (with the probe field reserved) to flow control buffers 220 and 222 (and similar buffers in other nodes) with respect to transmitting and receiving packets.

Node logic 224 may further include logic corresponding to the various I/O or peripheral functions performed by I/O node 204A. For example, I/O node 204A may include storage peripherals such as disk drives, CD ROMs, DVD drives, etc. I/O node 204A may include communications peripherals such as IEEE 1394, Ethernet, Universal Serial Bus (USB), Peripheral Component Interconnect (PCI) bus, modem, etc. Any suitable I/O function may be included in I/O node 204A.

Turning now to Fig. 24, a flowchart is shown illustrating operation of one embodiment of node logic 224 for receiving a packet. Other embodiments are possible and contemplated. The embodiment illustrated receives packets into buffers 220 and 222 as a series of bit times. Other embodiments may accumulate the bit times of a packet in interface logic 18M-18N and provide the complete packets to buffers 220 and 222, in which cases steps related to managing the receipt of packets in bit times may be eliminated. While the steps shown in Fig. 24 are illustrated in a particular order for ease of understanding, any suitable order may be used. Additionally, steps may be performed in parallel using combinatorial logic within node logic 224. The steps illustrated in Fig. 24 may be performed in parallel and independently for each interface logic 18M-18N, since bit times may be received concurrently from each interface logic. Steps 100-112 may be similar to the correspondingly described steps of Fig. 14 above.

Turning now to Fig. 25, a flowchart is shown illustrating operation of one embodiment of node logic 224 for processing a command packet. Other embodiments are possible and contemplated. While the steps shown in Fig. 25 are illustrated in a particular order for ease of understanding, any suitable order may be used. Additionally, steps may be performed in parallel using combinatorial logic within node logic 224. The steps illustrated in Fig. 25 may be performed in parallel and independently for each interface logic 18M-18N and/or each command packet buffer, since command packets from different interfaces and/or different virtual channels are physically independent. Alternatively, one command packet (or one command packet per interface logic 18M-18N) may be selected for processing according to a suitable fairness algorithm. Generally, packets selected from one virtual channel for processing obey the ordering rules for packets within a virtual channel (e.g. packets from the same source to the same destination are selected in order) but packets may be selected for processing out of order, if desired and the ordering rules allow such selection.

Step 126 may generally be similar to the corresponding step of Fig. 15 (although based on unit IDs and unit ID registers 230A-230N). Additionally, node logic 224 is configured to forward a packet in the same direction (upstream or downstream) rather than according to a packet routing table (step 242). If the packet is targeted at this node, node logic 224 accepts the packet (removing the packet from the downstream flow) and processes the packet (step 240). It is noted that, once the command packet is processed (either forwarded or accepted by this node), the command packet is removed from the command buffer entry (and the data packet is removed from the data buffer entry, if applicable).

It is noted that, if a selected command packet specifies a corresponding data packet, various embodiments may process the command packet even if the data packet has not yet been received, or may await arrival of the data packet to simplify forwarding of the data or to allow another control packet which specifies a data packet which is complete to be forwarded on the same link. If the data packet has not been received when the command packet is processed, the data packet may be handled as described above when the data packet is received.

Turning now to Fig. 26, a flowchart is shown illustrating operation of one embodiment of node logic 224 for processing a response packet. Other embodiments are possible and contemplated. While the steps shown in Fig. 26 are illustrated in a particular order for ease of understanding, any suitable order may be used. Additionally, steps may be performed in parallel using combinatorial logic within node logic 224. The steps illustrated in Fig. 26 may be performed in parallel and independently for each interface logic 18M-18N and/or each response packet buffer, since command packets from different interfaces and/or different virtual channels are physically independent. Step 144 may be similar to the corresponding step of Fig. 16 (although based on unit IDs and unit ID registers 230A-230N for the node logic 224).

If the destination node is another node, node logic 224 forwards the response packet (and corresponding data packet, if applicable) subject to a free buffer entry for the response virtual channel in the receiver on the link to which the response packet is forwarded (step 250). The receiver is the node which allows the response packet to flow in the same direction (upstream or downstream) as the packet was already flowing.

If the destination node of the response packet is this node, node logic 224 is configured to move the corresponding data packet, if any, from the corresponding response data buffer to the data buffer allocated to that response (step 252). In other words, node logic 224 consumes the data. Node logic 224 then completes the corresponding command, and deallocates the data buffer (step 254). It is noted that, once the response packet is processed (either forwarded or accepted by this node), the response packet is removed from the response buffer entry (and the data packet is removed from the data buffer entry, if applicable).

It is noted that, if a selected response packet specifies a corresponding data packet, various embodiments may process the response packet even if the data packet has not yet been received, or may await arrival of the data packet to simplify forwarding of the data or to allow another control packet which specifies a data packet which is complete to be forwarded on the same link. If the data packet has not been received when the response packet is processed, the data packet may be handled as described above when the data packet is received.

Turning now to Fig. 27, a flowchart is shown illustrating operation of one embodiment of node logic for initiating a packet on the links to which the node is coupled. Other embodiments are possible and contemplated. While the steps shown in Fig. 27 are illustrated in a particular order for ease of understanding, any suitable order may be used. Additionally, steps may be performed in parallel using combinatorial logic within node logic 224.

Node logic 224 determines if the transaction to be initiated may result in data being return to this node (decision block 260). For example, read transactions initiated by the node cause data to be returned to the node, while write transactions initiated by the node do not cause data to be returned to the node. If the transaction may result in data being returned to this node, node logic 224 allocates a data buffer to store the returned data (step 262). Subsequently, node logic 224 transmits the packet (step 164).

Industrial Applicability

The present invention may be applicable in computer systems.

## Claims

**1.** A method for routing packets among a plurality of nodes (12A-12D, 204A-204C) in a computer (10), the method comprising:

receiving a first packet in a first node (12A, 204A) of said plurality of nodes (12A-12D, 204A-204C), said first node (12A, 204A) comprising a plurality of packet buffers (60A)-60C, 220) each assigned to a different one of a plurality of virtual channels (40A-40B); determining a first virtual channel (40A) of said plurality of virtual channels (40A-40B) to which said first packet belongs; and
storing said first packet in a first packet buffer (60A, 220) assigned to said first virtual channel (40A);

**characterised in that** the first packet is a control packet and the method further comprises receiving a first data packet specified by said first control packet; and
storing said first data packet in a first data buffer (60D, 220) of a plurality of data buffers (60D-60E, 220) within said first node (12A, 204A), each of said plurality of data buffers (60D-60E, 220) being assigned to a different one of said plurality of virtual channels (40A-40B).

**2.** A method according to claim I wherein the determination of the first virtual channel to which the first packet belongs is dependent on a packet type of the first packet.

**3.** A method as claimed in claim 1 further comprising:

receiving a second control packet in said first node (12A, 204A);
determining a second virtual channel (40B) of said plurality of virtual channels (40A-40B) to which said second control packet belongs, said second virtual channel (40B) being different from said first virtual channel (40A); and
storing said second control packet in a second control packet buffer (60B, 220) of said plurality of control packet buffers (60A-60C, 220), said second control packet buffer (60B, 220) being assigned to said second virtual channel (40B).

**4.** A method as claimed in claim 3 further comprising:

transmitting said first control packet to a second node (12B, 204B) of said plurality of nodes (12A-12D, 204A-204C), said second node (12B, 204B) comprising a second plurality of control packet buffers (60A-60C, 220), each of said second plurality of control packet buffers (60A-60C, 220) being assigned to a different one of said plurality of virtual channels (40A-40B), said transmitting being responsive to a third control packet buffer (60A, 220) of said second plurality of control packet buffers (60A-60C, 220) including space to store said first control packet, said third control packet buffer (60A, 220) being assigned to said first virtual channel (40A); and transmitting said second control packet to said second node responsive to a fourth control packet buffer (60B, 220) of said second plurality of control packet buffers (60A-60C, 220) including space to store said second control packet, said fourth control packet buffer (60B, 220) being assigned to said second virtual channel (40B).

**5.** A computer system comprising:

a first node (12A, 204B) configured to transmit a first packet; and
a second node (12B, 204A) coupled to receive said first packet from said first node (12A, 204B), wherein said second node (12B, 204A) comprises a plurality of packet buffers (60A-60C, 220), and wherein each of said plurality of packet buffers (60A-60C, 220) is assigned to a different one of a plurality of virtual channels (40A-40B), and wherein said second node (12B, 204A) is configured to store said first packet in a first packet buffer (60A, 220) of said plurality of packet buffers (60A-60C, 220) responsive to a first virtual channel (40A) of said plurality of virtual channels (40A-40B) to which said first packet belongs,

**characterised in that** the first packet is a control packet and said second node (12B, 204A) further comprises a plurality of data buffers (60D-60E, 220), each of said plurality of data buffers (60D-60E, 220) being assigned to a different one of said plurality of virtual channels (40A-40B) which includes at least one control packet which specifies a corresponding data packet

**6.** A computer system according to claim 5 wherein the second node is configured to determine the first virtual channel to which the first packet belongs dependent on a packet type of the first packet.

**7.** A computer system as claimed in claim 5 or claim 6 wherein said first node (12A, 204B) is configured to transmit a first data packet specified by said first control packet, and wherein said second node (12B, 204A) is configured to store said first data packet in a first data buffer (60D, 220) of said plurality of data buffers (60D-60E, 220), said first data buffer (60D, 220) being assigned to said first virtual channel (40A).

**8.** A computer system as claimed in claim 5 wherein said first node (12A, 204B) is configured to transmit a second control packet belonging to a second virtual channel (40B) of said plurality of virtual channels (40A-40B), said second virtual channel (40B) being different from said first virtual channel (40A), and wherein said second node (12B, 204A) is configured to store said second control packet in a second control packet buffer (60B, 220) of said plurality of control packet buffers (60A-60C, 220).

**9.** A computer system as claimed in claim 7 wherein, if said second node (12B, 204A) is a destination of said first control packet, said second node (12B, 204A) is configured to remove said first control packet from said first control packet buffer (60A, 220) and to respond to said first control packet, and wherein said second node (12B, 204A) is further configured to remove said first data packet from said first data buffer (60D, 220) and to process said first data packet.

**10.** A computer system as claimed in claim 7 further comprising a third node (12C, 204C) coupled to receive packets from said second node (12B, 204A), wherein, if said second node (12B, 204A) is not a destination of said first control packet, said second node (12B, 204A) is configured to remove said first control packet from said first control packet buffer (60A, 220) and to forward said first control packet to said third node (12C, 204C), and wherein said second node (12B, 204A) is further configured to remove said first data packet from said first data buffer (60D, 220) and to forward said data packet to said third node (12C, 204C).

## Patentansprüche

**1.** Verfahren zum Leiten von Paketen zwischen mehreren Knotenpunkten (12A-12D,204A-204C) in einem Computer (10), mit den folgenden Schritten:

Empfangen eines ersten Pakets an einem ersten Knotenpunkt (12A, 204A) der mehreren Knotenpunkte (12A-12D, 204A-204C), wobei der erste Knotenpunkt (12A,204A) mehrere Paket-Puffer (60A-60C,220) aufweist, die jeweils einem unterschiedlichen mehrerer virtueller Kanäle (40A-40B) zugeordnet sind;

Bestimmen eines ersten virtuellen Kanals (40A) der mehreren virtuellen Kanäle (40A-40B), zu dem das erste Paket gehört; und

Speichern des ersten Pakets in einem ersten Paket-Puffer (60A,220), der dem ersten virtuellen Kanal (40A) zugeordnet ist;

**dadurch gekennzeichnet, dass** das erste Paket ein Steuer-Paket ist und das Verfahren ferner umfasst: das Empfangen eines durch das erste Steuer-Paket spezifizierten ersten Daten-Pakets; und das Speichern des ersten Daten-Pakets in einem ersten Daten-Puffer (60D,220) mehrerer Daten-Puffer (60D-60E,220) in dem ersten Knotenpunkt (12A,204A), wobei jeder der mehreren Daten-Puffer (60D-60E,220) einem unterschiedlichen der mehreren virtuellen Kanäle (40A-40B) zugeordnet ist.

**2.** Verfahren nach Anspruch 1, bei dem das Bestimmen des ersten virtuellen Kanals, zu dem das erste Paket gehört, von einem Paket-Typ des ersten Pakets abhängig ist.

**3.** Verfahren nach Anspruch 1, ferner mit den folgenden Schritten:

Empfangen eines zweiten Steuer-Pakets an dem ersten Knotenpunkt (12A,204A);

Bestimmen eines zweiten virtuellen Kanals (40B) der mehreren virtuellen Kanäle (40A-40B), zu dem das zweite Steuer-Paket gehört, wobei sich der zweite virtuelle Kanal (40B) von dem ersten virtuellen Kanal (40A) unterscheidet; und

Speichern des zweiten Steuer-Pakets in einem zweiten Steuer-Paket-Puffer (60B,220) der mehreren Steuer-Paket-Puffer (60A-60C,220), wobei der zweite Steuer-Paket-Puffer (608,220) dem zweiten virtuellen Kanal (40B) zugeordnet ist.

**4.** Verfahren nach Anspruch 3, ferner mit den folgenden Schritten:

Übertragen des ersten Steuer-Pakets zu einem zweiten Knotenpunkt (12B,204B) der mehreren Knotenpunkte (12A-12D,204A-204C), wobei der zweite Knotenpunkt (12B,204B) eine zweite Anzahl von Steuer-Paket-Puffern (60A-60C,220) aufweist, von denen jeder einem unterschiedlichen der mehreren virtuellen Kanäle (40A-40B) zugeordnet ist, wobei das Übertragen als Reaktion darauf erfolgt, dass ein dritter Steuer-Paket-Puffer (60A,220) der zweiten Anzahl von Steuer-Paket-Puffern (60A-60C,220) Platz zum Speichern des ersten Steuer-Paktes enthält, wobei der dritte Steuer-Paket-Puffer (60A,220) dem ersten virtuellen Kanal (40A) zugeordnet ist; und

Übertragen des zweiten Steuer-Pakets zu dem zweiten Knotenpunkt als Reaktion darauf, dass ein vierter Steuer-Paket-Puffer (60B,220) der zweiten Anzahl von Steuer-Paket-Puffern (60A-60C,220) Platz zum Speichern des zweiten Steuer-Paktes enthält, wobei der vierte Steuer-Paket-Puffer (60B,220) dem zweiten virtuellen Kanal (40B) zugeordnet ist.

**5.** Computersystem mit:

einem ersten Knotenpunkt (12A, 204B) zum Senden eines ersten Pakets; und

einem zweiten Knotenpunkt (12B,204A), der zum Empfangen des ersten Pakets von dem ersten Knotenpunkt (12A, 204B) angeordnet ist, wobei der zweite Knotenpunkt (12B,204A) mehrere Paket-Puffer (60A-60C,220) aufweist, und wobei jeder der mehreren Paket-Puffer (60A-60C,220) einem unterschiedlichen mehrerer virtueller Kanäle (40A-40B) zugeordnet ist, und wobei der zweite Knotenpunkt (12B,204A) als Reaktion auf einen ersten virtuellen Kanal (40A) der mehreren virtuellen Kanäle (40A-40B), zu dem das erste Paket gehört, das erste Paket in ersten Paket-Puffer (60A,220) der mehreren Paket-Puffer (60A-60C,220) speichert,

**dadurch gekennzeichnet, dass** das erste Paket ein Steuer-Paket ist und der zweite Knotenpunkt (12B,204A) ferner mehrere Daten-Puffer (60D-60E,220) aufweist, von denen jeder einem unterschiedlichen der mehreren virtuellen Kanäle (40A-40B) zugeordnet ist, der mindestens eine Steuer-Paket enthält, das ein entsprechendes Daten-Paket spezifiziert.

**6.** Computersystem nach Anspruch 5, bei dem der zweite Knotenpunkt in Abhängigkeit von einem Paket-Typ des ersten Pakets den ersten virtuellen Kanal bestimmt, zu dem das erste Paket gehört.

7. Computersystem nach Anspruch 5 oder Anspruch 6, bei dem der erste Knotenpunkt (12A,204B) ein von dem ersten Steuer-Paket spezifiziertes erstes Daten-Paket überträgt, und bei dem der zweite Knotenpunkt (12B, 204A) das erste Daten-Paket in einem ersten Daten-Puffer (60D,220) der mehreren Daten-Puffer (60D-60E,220) speichert, wobei der erste Daten-Puffer (60D,220) dem ersten virtuellen Kanal (40A) zugeordnet ist.

8. Computersystem nach Anspruch 5, bei dem der erste Knotehpunkt (12A, 204B) ein zweites Steuer-Paket überträgt, das zu einem zweiten virtuellen Kanal (40B) der mehreren virtuellen Kanäle (40A-40B) gehört, wobei sich der zweite virtuelle Kanal (40B) von dem ersten virtuellen Kanal (40A) unterscheidet, und wobei der zweite Knotenpunkt (12B,204A) das zweite Steuer-Paket in einem zweiten Steuer-Paket-Puffer (60B,220) der mehreren Steuer-Paket-Puffer (60A-60C,220) speichert.

9. Computersystem nach Anspruch 7, bei dem, falls der zweite Knotenpunkt (12B,204A) ein Bestimmungsort des ersten Steuer-Pakets ist, der zweite Knotenpunkt (12B,204A) das erste Steuer-Paket aus dem ersten Steuer-Paket-Puffer (60A,220) entfernt und auf das erste Steuer-Paket reagiert, und bei dem der zweite Knotenpunkt (12B,204A) ferner das erste Daten-Paket aus dem ersten Daten-Puffer (60D,220) entfernt und das erste Daten-Paket verarbeitet.

10. Computersystem nach Anspruch 7, ferner mit einem dritten Knotenpunkt (12C,204C), der zum Empfangen von Paketen von dem zweiten Knotenpunkt (12B,204A) angeordnet ist, wobei, falls der zweite Knotenpunkt (12B,204A) kein Bestimmungsort des ersten Steuer-Pakets ist, der zweite Knotenpunkt (12B,204A) das erste Steuer-Paket aus dem ersten Steuer-Paket-Puffer (60A,220) entfernt und das erste Steuer-Paket an den dritten Knotenpunkt (12C,204C) ausgibt, und wobei der zweite Knotenpunkt (12B,204A) ferner das erste Daten-Paket aus dem ersten Daten-Puffer (60D,220) entfernt und das erste Daten-Paket an den dritten Knotenpunkt (12C,204C) ausgibt.

**Revendications**

1. Procédé pour acheminer des paquets parmi une pluralité de noeuds (12A à 12D, 204A à 204C) dans un ordinateur (10), le procédé comprenant les étapes consistant à :

- recevoir un premier paquet dans un premier noeud (12A, 204A) de ladite pluralité de noeuds (12A à 12D, 204A à 204C), ledit premier noeud (12A, 204A) comprenant une pluralité de mémoires tampons de paquets (60A à 60C, 220), chacune étant attribuée à un élément différent d'une pluralité de canaux virtuels (40A à 40B) ;
- déterminer un premier canal virtuel (40A) de ladite pluralité de canaux virtuels (40A à 40B) auxquels ledit premier paquet appartient ; et
- mémoriser ledit premier paquet dans une première mémoire tampon de paquet (60A, 220) attribué audit premier canal virtuel (40A) ;

**caractérisé en ce que** le premier paquet est un paquet témoin et le procédé comprend de plus les étapes consistant à :

- recevoir un premier paquet de données spécifié par ledit premier paquet témoin ; et
- mémoriser ledit premier paquet de données dans une première mémoire tampon de données (60D, 220) d'une pluralité de mémoires tampons de données (60D à 60E, 220) à l'intérieur dudit premier noeud (12A, 204A), chaque mémoire tampon de données de ladite pluralité de mémoires tampons de données (60D à 60E, 220) étant attribuée à un élément différent de ladite pluralité de canaux virtuels (40A à 40B).

2. Procédé selon la revendication 1, dans lequel la détermination du premier canal virtuel auquel le premier paquet appartient dépend d'un type de paquet du premier paquet.

3. Procédé selon la revendication 1, comprenant de plus les étapes consistant à :

- recevoir un deuxième paquet témoin dans ledit premier noeud (12A, 204A) ;
- déterminer un deuxième canal virtuel (40B) de ladite pluralité de canaux virtuels (40A à 40B) auquel ledit deuxième paquet témoin appartient, ledit deuxième canal virtuel (40B) étant différent dudit premier canal virtuel (40A) ; et

- mémoriser ledit deuxième paquet témoin dans une deuxième mémoire tampon de paquet témoin (60B, 220) de ladite pluralité de mémoires tampons de paquet témoin (60A à 60C, 220), ladite deuxième mémoire tampon de paquet témoin (60B, 220) étant attribuée audit deuxième canal virtuel (40B).

**4.** Procédé selon la revendication 3, comprenant de plus les étapes consistant à :

- transmettre ledit premier paquet témoin à un deuxième noeud (12B, 204B) de ladite pluralité de noeuds (12A à 12D, 204A à 204C), ledit deuxième noeud (12B, 204B) comprenant une deuxième pluralité de mémoires tampons de paquet témoin (60A à 60C, 220), chacune de ladite deuxième pluralité de mémoires tampons de paquet témoin (60A à 60C, 220) étant attribuée à un élément différent de ladite pluralité de canaux virtuels (40A à 40B), ladite transmission étant sensible à une troisième mémoire tampon de paquet témoin (60A, 220) de ladite deuxième pluralité de mémoires tampons de paquet témoin (60A à 60C, 220) incluant un espace pour mémoriser ledit premier paquet témoin, ladite troisième mémoire tampon de paquet témoin (60A, 220) étant attribuée audit premier canal virtuel (40A) ; et
- transmettre ledit deuxième paquet témoin audit deuxième noeud sensible à une quatrième mémoire tampon de paquet témoin (60B, 220) de ladite deuxième pluralité de mémoires tampons de paquet témoin (60A à 60C, 220) incluant un espace pour mémoriser ledit deuxième paquet témoin, ladite quatrième mémoire tampon de paquet témoin (60B, 220) étant attribuée audit deuxième canal virtuel (40B).

**5.** Système informatique comprenant :

- un premier noeud (12A, 204B) configuré pour transmettre un premier paquet ; et
- un deuxième noeud (12B, 204A) couplé pour recevoir ledit premier paquet provenant dudit premier noeud (12A, 204B), dans lequel ledit deuxième noeud (12B, 204A) comprend une pluralité de mémoires tampons de paquet (60A à 60C, 220), et dans lequel chacune de ladite pluralité de mémoires tampons de paquet (60A à 60C, 220) est attribuée à un élément différent d'une pluralité de canaux virtuels (40A à 40B), et dans lequel ledit deuxième noeud (12B, 204A) est configuré pour mémoriser ledit premier paquet dans une première mémoire tampon de paquet (60A, 220) de ladite pluralité de mémoires tampons de paquet (60A à 60C, 220) sensible à un premier canal virtuel (40A) de ladite pluralité de canaux virtuels (40A à 40B) auxquels ledit premier paquet appartient ;

**caractérisé en ce que** ledit premier paquet est un paquet témoin et ledit deuxième noeud (12B, 204A) comprend de plus une pluralité de mémoires tampons de données (60D à 60E, 220), chacune de ladite pluralité de mémoires tampons de données (60D à 60E, 220) étant attribuée à un élément différent de ladite pluralité de canaux virtuels (40A à 40B) qui inclut au moins un paquet témoin qui spécifie un paquet de données correspondant.

**6.** Système informatique selon la revendication 5, dans lequel le deuxième noeud est configuré pour déterminer le premier canal virtuel auquel le premier paquet appartient selon un type de paquet du premier paquet.

**7.** Système informatique selon la revendication 5 ou 6, dans lequel ledit premier noeud (12A, 204B) est configuré pour transmettre un premier paquet de données spécifié par ledit premier paquet témoin, et dans lequel ledit deuxième noeud (12B, 204A) est configuré pour mémoriser ledit premier paquet de données dans une première mémoire tampon de données (60D, 220) de ladite pluralité de mémoires tampons (60D à 60E, 220), ladite première mémoire tampon de données (60D, 220) étant attribuée audit premier canal virtuel (40A).

**8.** Système informatique selon la revendication 5, dans lequel ledit premier noeud (12A, 204B) est configuré pour transmettre un deuxième paquet témoin appartenant à un deuxième canal virtuel (40B) de ladite pluralité de canaux virtuels (40A à 40B), ledit deuxième canal virtuel (40B) étant différent dudit premier canal virtuel (40A), et dans lequel ledit deuxième noeud (12B, 204A) est configuré pour mémoriser ledit deuxième paquet témoin dans une deuxième mémoire tampon de paquet témoin (60B, 220) de ladite pluralité de mémoires tampons de paquet témoin (60A à 60C, 220).

**9.** Système informatique selon la revendication 7, dans lequel, si ledit deuxième noeud (12B, 204A) est une destination dudit premier paquet témoin, ledit deuxième noeud (12B, 204A) est configuré pour retirer ledit premier paquet témoin de ladite première mémoire tampon de paquet témoin (60A, 220) et répondre audit premier paquet témoin, et dans lequel ledit deuxième noeud (12B, 204A) est de plus configuré pour retirer ledit premier paquet de données de ladite première mémoire tampon de données (60D, 220) et traiter ledit premier paquet de données.

**10.** Système informatique selon la revendication 7, comprenant de plus un troisième noeud (12C, 204C) couplé pour recevoir des paquets provenant dudit deuxième noeud (12B, 204A), dans lequel, si ledit deuxième noeud (12B, 204A) n'est pas une destination dudit premier paquet témoin, ledit deuxième noeud (12B, 204A) est configuré pour retirer ledit premier paquet témoin de ladite première mémoire tampon de paquet témoin (60A, 220) et transférer ledit premier paquet témoin vers ledit troisième noeud (12C, 204C), et dans lequel ledit deuxième noeud (12B, 204A) est de plus configuré pour retirer ledit premier paquet de données de ladite première mémoire tampon de données (60D, 220) et transférer ledit paquet de données vers ledit troisième noeud (12C, 204C).

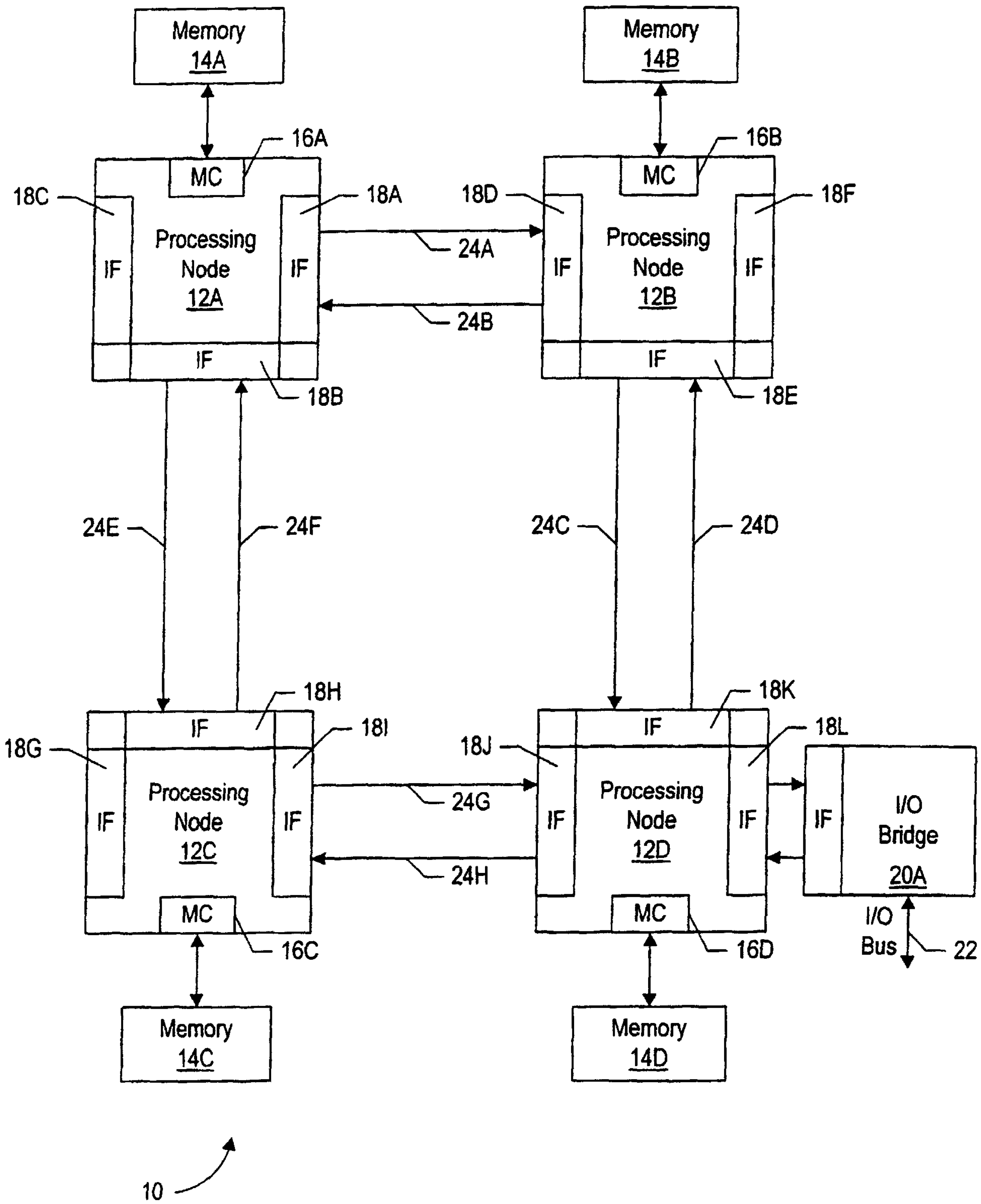

Memory
14A
Memory
14B
MC
16A
MC
16B
18C
IF
Processing
Node
12A
IF
18A
18D
IF
Processing
Node
12B
IF
18F
24A
24B
IF
18B
IF
18E
24E
24F
24C
24D
18H
IF
18G
IF
Processing
Node
12C
IF
18I
18J
IF
Processing
Node
12D
IF
18K
18L
IF
I/O
Bridge
20A
24G
24H
MC
16C
MC
16D
I/O
Bus
22
Memory
14C
Memory
14D
10


Fig. 1

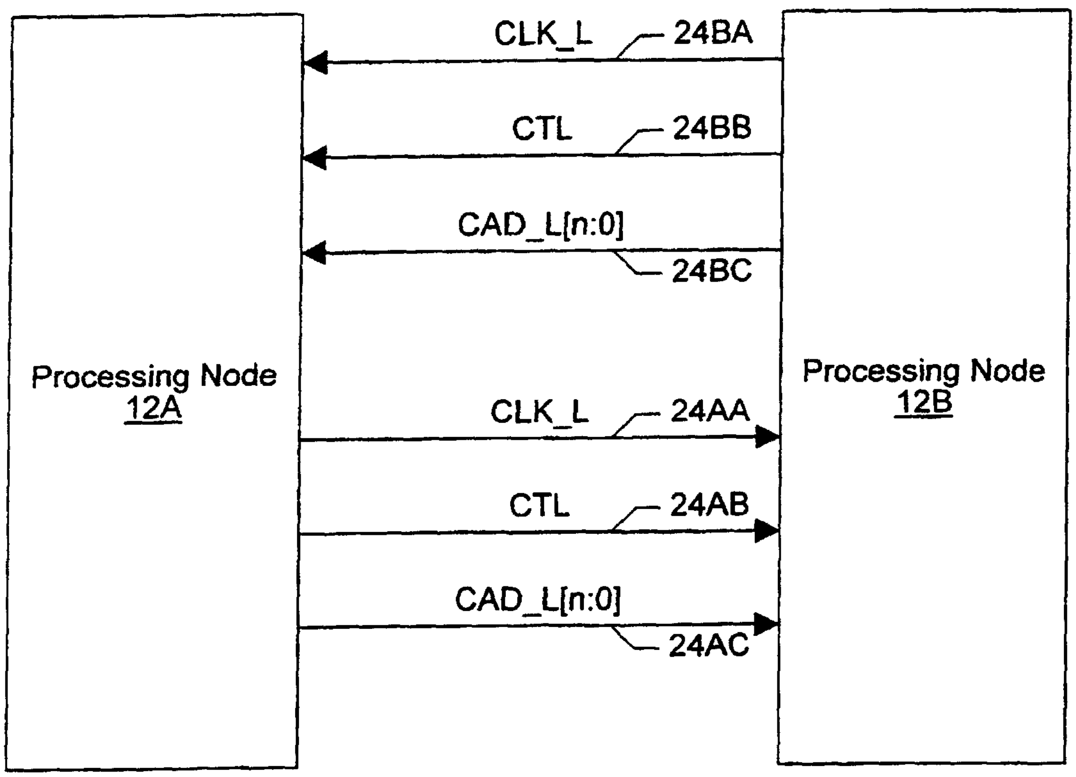
CLK_L
24BA
CTL
24BB
CAD_L[n:0]
24BC
Processing Node
12A
Processing Node
12B
CLK_L
24AA
CTL
24AB
CAD_L[n:0]
24AC

Fig. 2

| Bit Time | 7 | 6 | 5 | 4 | 3 | 2 | 1 | 0 |
|---|---|---|---|---|---|---|---|---|
| 1 | | | CMD[5:0] | | | | | |
| 2 | | | | | | | | |
| 3 | | | | | | | | |
| 4 | | | | | | | | |

30

Fig. 3

| Bit Time | 7 | 6 | 5 | 4 | 3 | 2 | 1 | 0 |
|---|---|---|---|---|---|---|---|---|
| 1 | SrcUnit [1:0] | | CMD[5:0] | | | | | |
| 2 | DestNode [2:0] | | | DestUnit [1:0] | | SrcNode[2:0] | | |
| 3 | | | | SrcTag[4:0] | | | | |
| 4 | | | | | | | | |
| 5 | Addr[15:8] | | | | | | | |
| 6 | Addr[23:16] | | | | | | | |
| 7 | Addr[31:24] | | | | | | | |
| 8 | Addr[39:32] | | | | | | | |

32

Fig. 4

| Bit Time | 7 | 6 | 5 | 4 | 3 | 2 | 1 | 0 |
|---|---|---|---|---|---|---|---|---|
| 1 | SrcUnit [1:0] | | CMD[5:0] | | | | | |
| 2 | DestNode [2:0] | | | DestUnit [1:0] | | SrcNode[2:0] | | |
| 3 | | | | SrcTag[4:0] | | | | |
| 4 | Sh | | | | | | | |

34

Fig. 5

| Bit Time | 7 | 6 | 5 | 4 | 3 | 2 | 1 | 0 |
|---|---|---|---|---|---|---|---|---|
| 1 | Data[7:0] | | | | | | | |
| 2 | Data[15:8] | | | | | | | |
| 3 | Data[23:16] | | | | | | | |
| 4 | Data[31:24] | | | | | | | |
| 5 | Data[39:32] | | | | | | | |
| 6 | Data[47:40] | | | | | | | |
| 7 | Data[55:48] | | | | | | | |
| 8 | Data[63:56] | | | | | | | |

36

Fig. 6

| CMD Code | VChan | Command | Packet Type |
|---|---|---|---|
| 000000 | - | Nop | Info |
| 000001 | C | VicBlk | Command/Data |
| 000010 | | Reserved | |
| 000011 | C | ValidateBlk | Command |
| 000100 | C | RdBlk | Command |
| 000101 | C | RdBlkS | Command |
| 000110 | C | RdBlkMod | Command |
| 000111 | C | ChangetoDirty | Command |
| x01xxx | C | WrSized | Command/Data |
| 01xxxx | C | ReadSized | Command |
| 100xxx | | Reserved | |
| 110000 | R | RdResponse | Response/Data |
| 110001 | R | ProbeResp | Response |
| 110011 | R | TgtDone | Response |
| 110100 | R | SrcDone | Response |
| 110101 | R | MemCancel | Response |
| 11011x | . | Reserved | |
| 11100x | P | Probe | Command |
| 111010 | P | Broadcast | Command |
| 111011 | | Reserved | |
| 11110x | | Reserved | |
| 111110 | | Reserved | |
| 111111 | - | Sync | Info |

38

Fig. 7

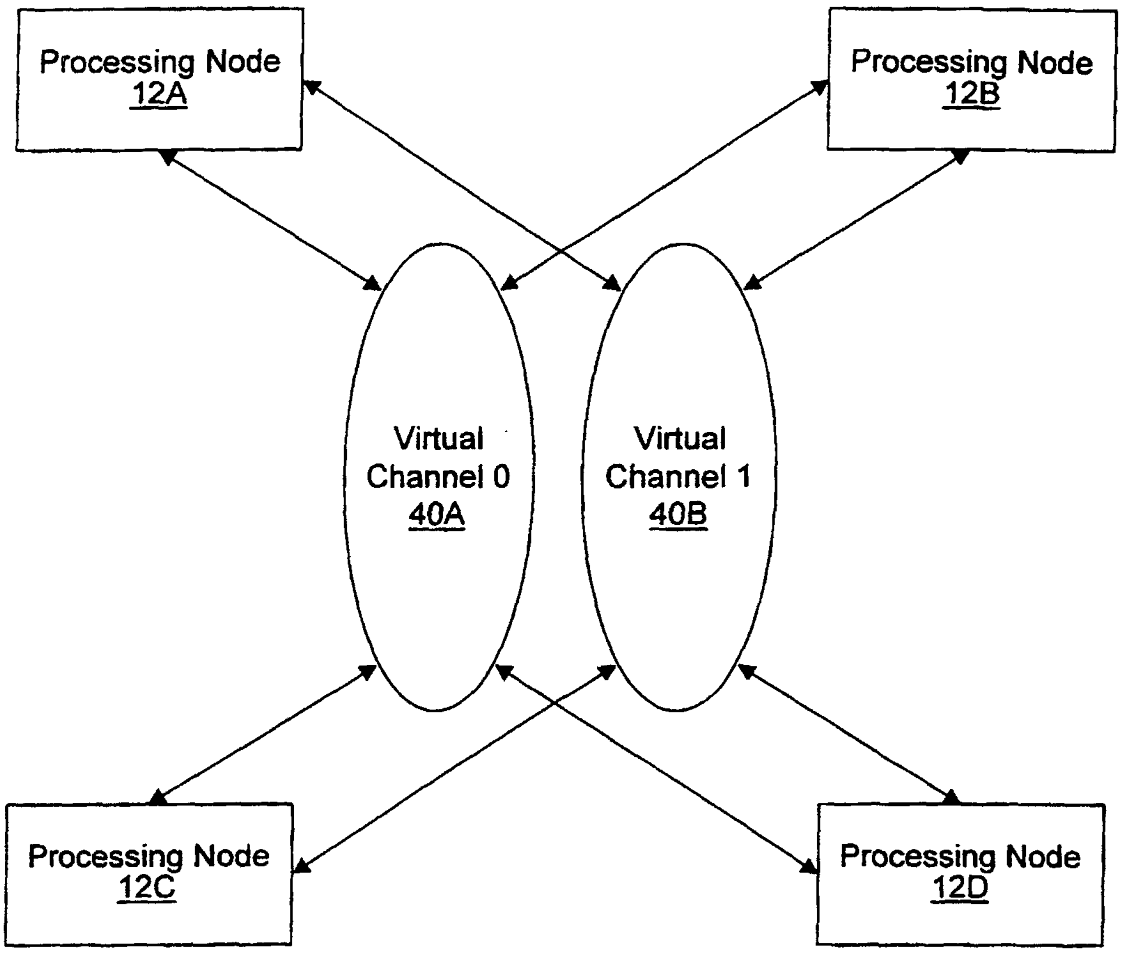
Processing Node
12A
Processing Node
12B
Virtual
Channel 0
40A
Virtual
Channel 1
40B
Processing Node
12C
Processing Node
12D

Fig. 8

Virtual Channels

| **Virtual Channel** | **Applicable Links** |
|---|---|
| Commands | Coherent and NonCoherent |
| Responses | Coherent and NonCoherent |
| Probes | Coherent Only |

42

Fig. 9

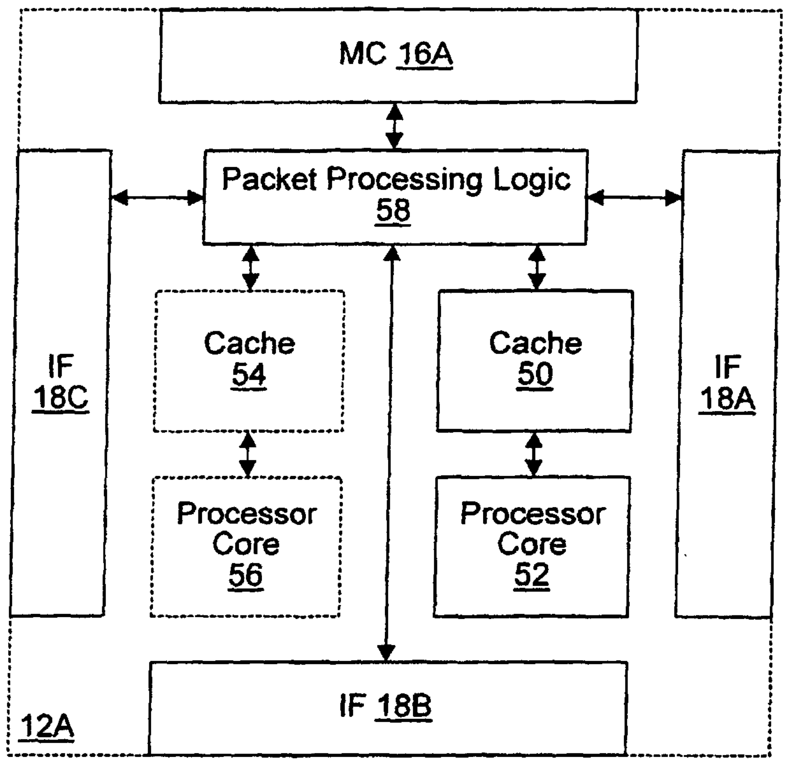
MC 16A
Packet Processing Logic 58
IF 18C
Cache 54
Processor Core 56
Cache 50
Processor Core 52
IF 18A
IF 18B
12A

Fig. 10

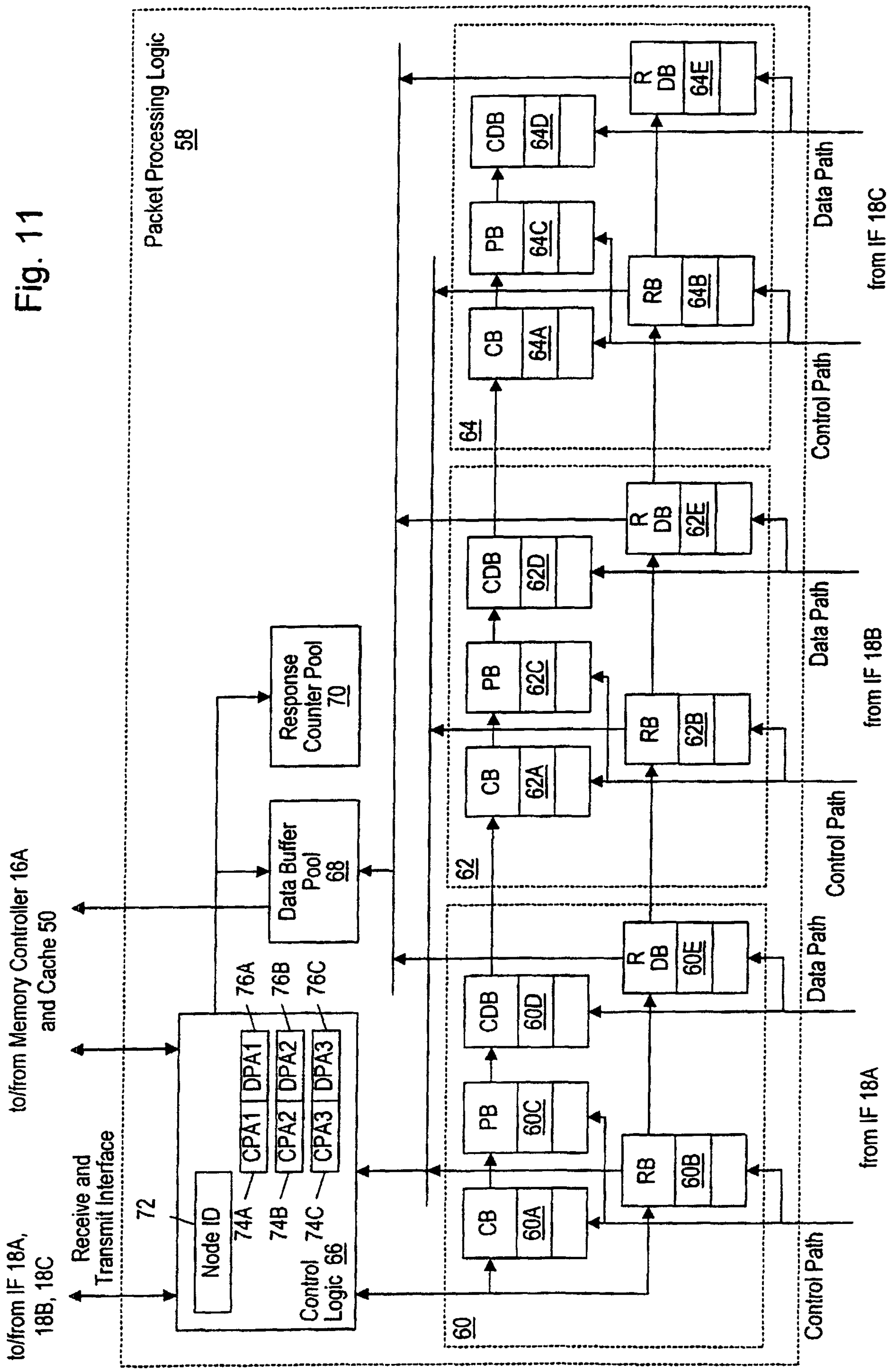
Packet Processing Logic 58
to/from IF 18A, 18B, 18C
Receive and Transmit Interface
to/from Memory Controller 16A and Cache 50
72
Node ID
74A
74B
74C
CPA1
DPA1
CPA2
DPA2
CPA3
DPA3
76A
76B
76C
Control Logic 66
Data Buffer Pool 68
Response Counter Pool 70
60
CB 60A
PB 60C
CDB 60D
RB 60B
R DB 60E
62
CB 62A
PB 62C
CDB 62D
RB 62B
R DB 62E
64
CB 64A
PB 64C
CDB 64D
RB 64B
R DB 64E
Control Path
Data Path
from IF 18A
Control Path
Data Path
from IF 18B
Control Path
Data Path
from IF 18C

Fig. 11

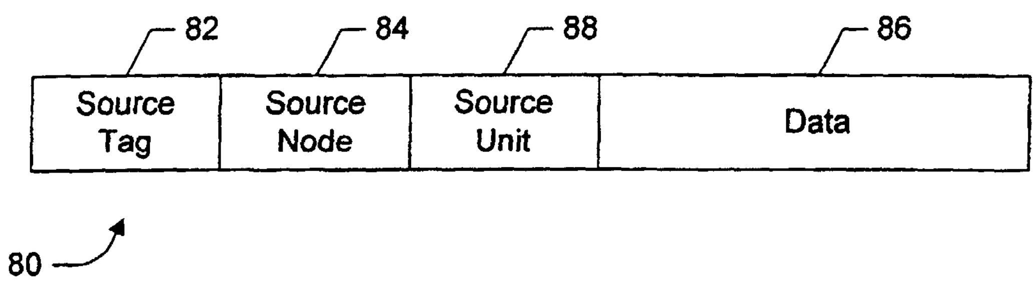
82
84
88
86
Source Tag
Source Node
Source Unit
Data
80

Fig. 12

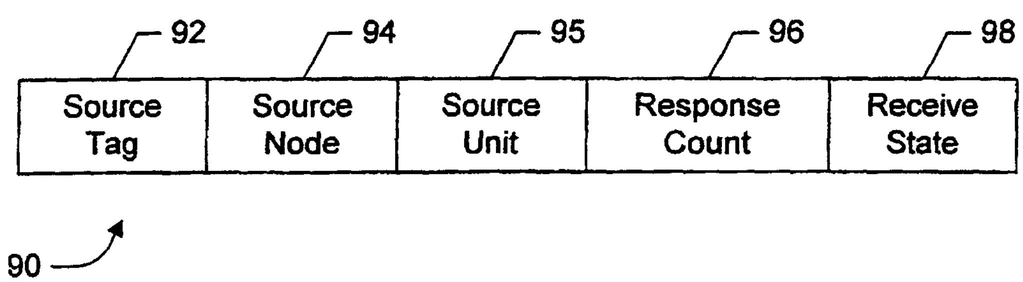
92
94
95
96
98
Source Tag
Source Node
Source Unit
Response Count
Receive State
90

Fig. 13

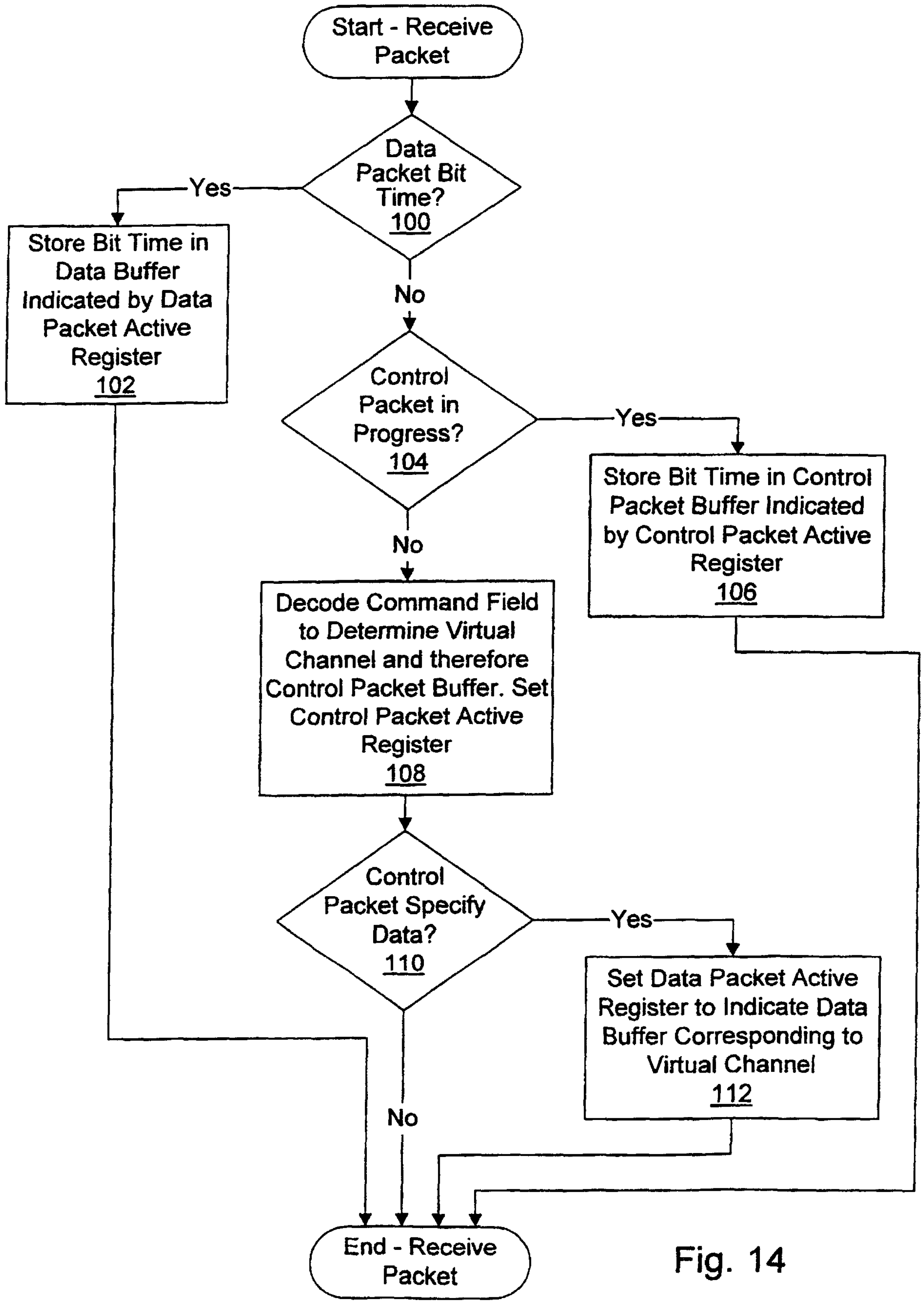
Start - Receive Packet
Data Packet Bit Time? 100
Yes
No
Store Bit Time in Data Buffer Indicated by Data Packet Active Register 102
Control Packet in Progress? 104
Yes
No
Store Bit Time in Control Packet Buffer Indicated by Control Packet Active Register 106
Decode Command Field to Determine Virtual Channel and therefore Control Packet Buffer. Set Control Packet Active Register 108
Control Packet Specify Data? 110
Yes
No
Set Data Packet Active Register to Indicate Data Buffer Corresponding to Virtual Channel 112
End - Receive Packet

Fig. 14

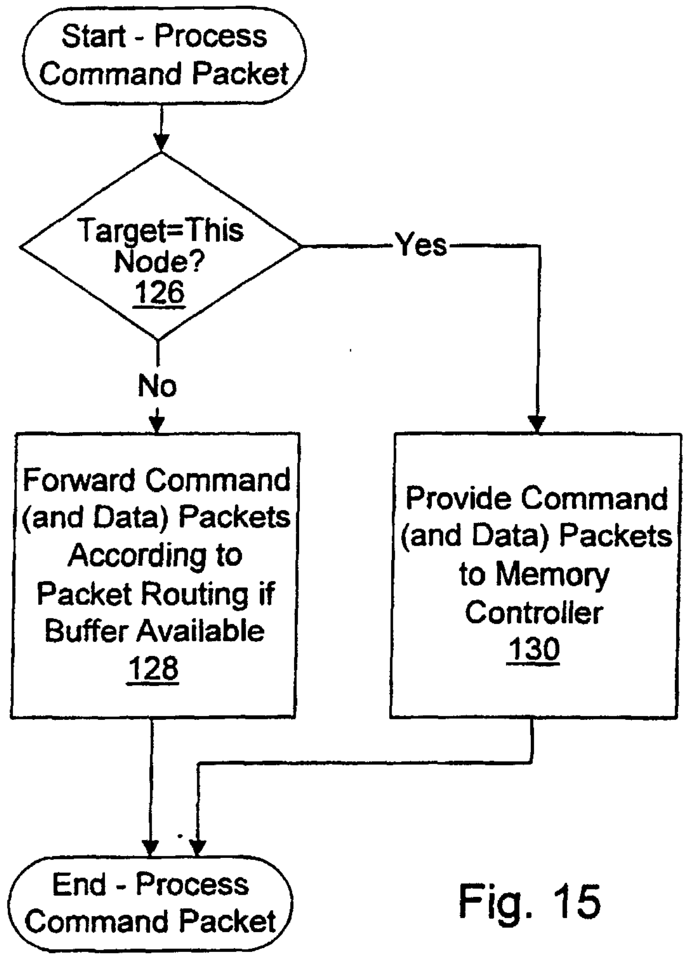
Start - Process Command Packet
Target=This Node? 126
Yes
No
Forward Command (and Data) Packets According to Packet Routing if Buffer Available 128
Provide Command (and Data) Packets to Memory Controller 130
End - Process Command Packet

Fig. 15

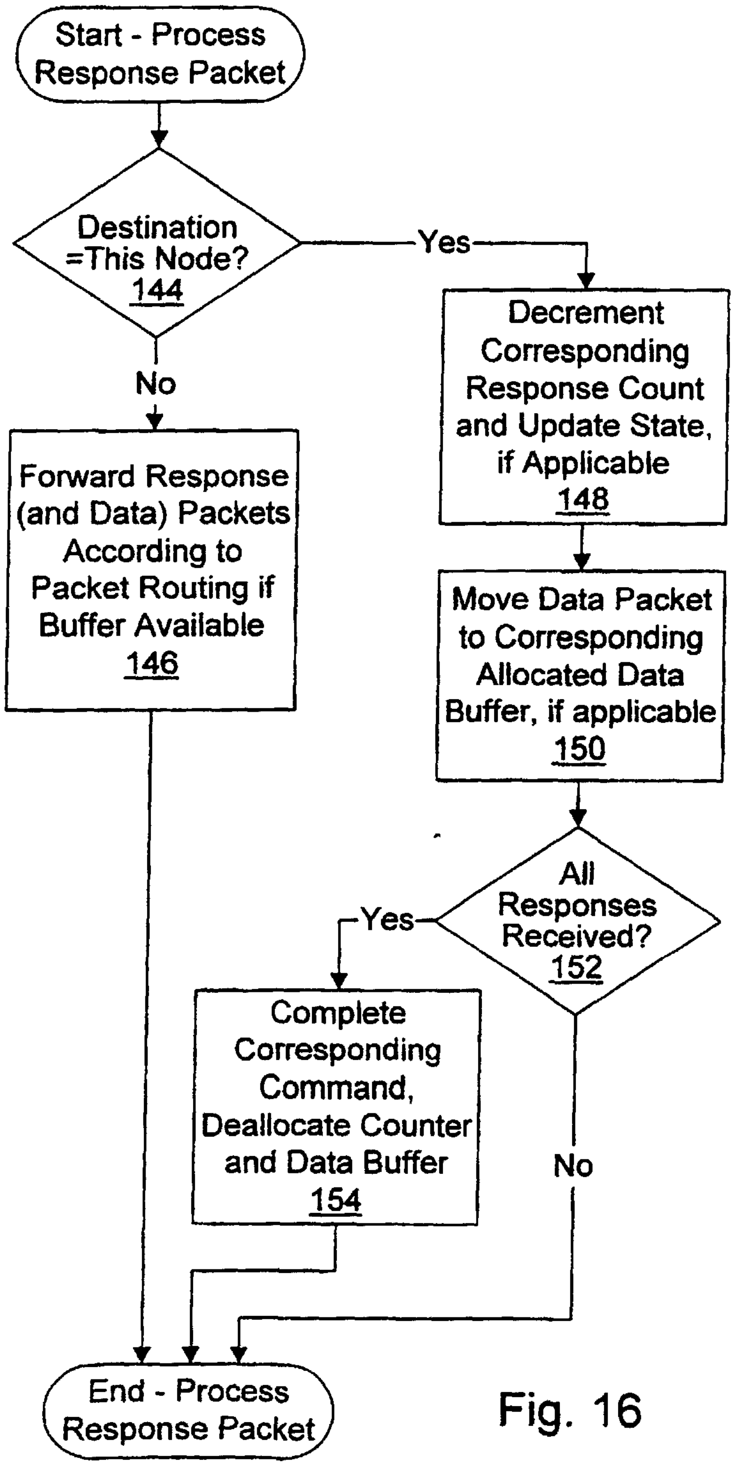
Start - Process Response Packet
Destination =This Node? 144
Yes
No
Decrement Corresponding Response Count and Update State, if Applicable 148
Forward Response (and Data) Packets According to Packet Routing if Buffer Available 146
Move Data Packet to Corresponding Allocated Data Buffer, if applicable 150
All Responses Received? 152
Yes
Complete Corresponding Command, Deallocate Counter and Data Buffer 154
No
End - Process Response Packet

Fig. 16

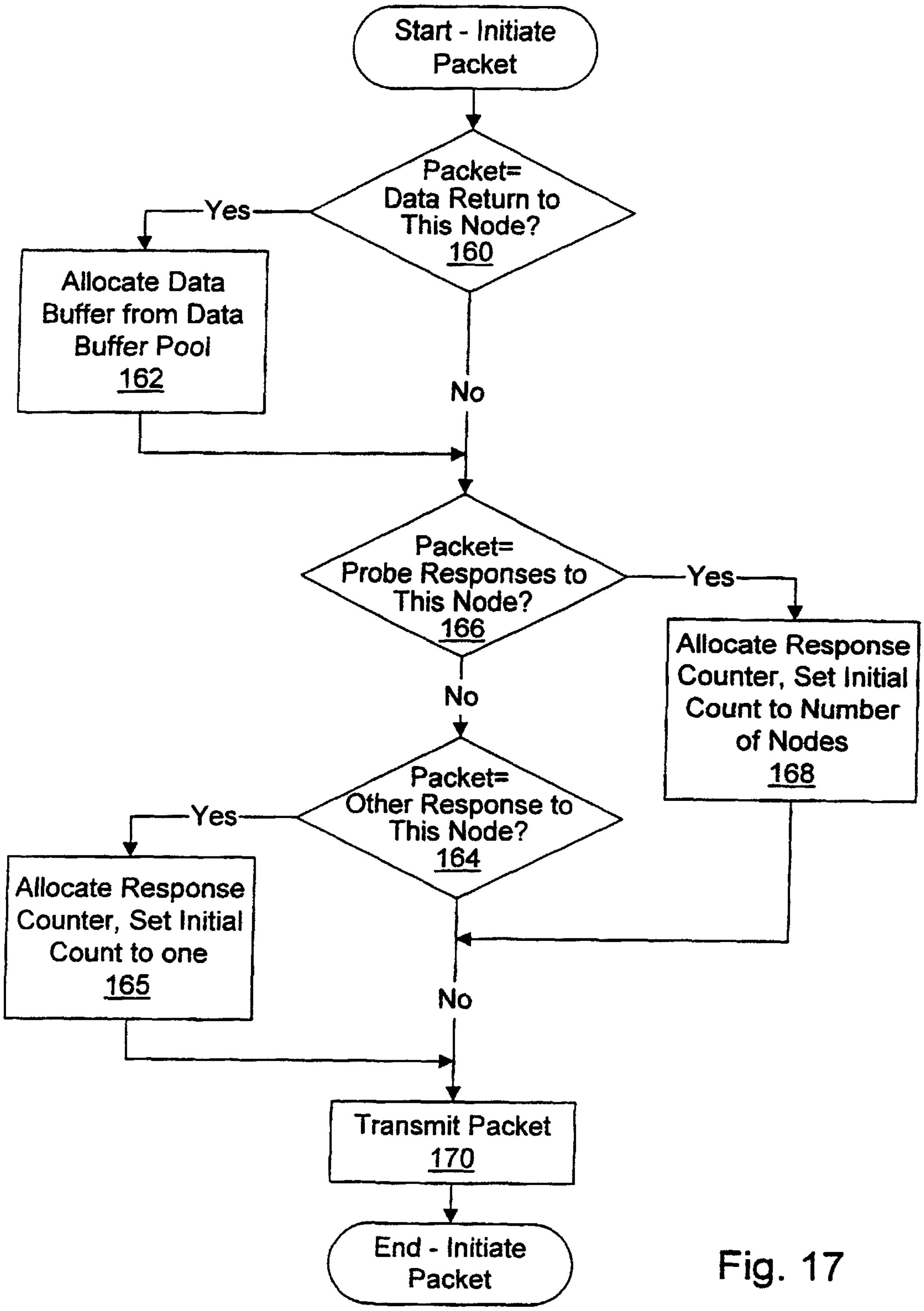
Start - Initiate Packet
Packet= Data Return to This Node? 160
Yes
Allocate Data Buffer from Data Buffer Pool 162
No
Packet= Probe Responses to This Node? 166
Yes
Allocate Response Counter, Set Initial Count to Number of Nodes 168
No
Packet= Other Response to This Node? 164
Yes
Allocate Response Counter, Set Initial Count to one 165
No
Transmit Packet 170
End - Initiate Packet

Fig. 17

| Bit Time | 7 | 6 | 5 | 4 | 3 | 2 | 1 | 0 |
|---|---|---|---|---|---|---|---|---|
| 1 | RSV | | CMD[5:0] | | | | | |
| 2 | RespData [1:0] | | Response [1:0] | | RSV | | RSV | |
| 3 | RSV | | Probe [1:0] | | Cmd Data[1:0] | | Cmd[1:0] | |
| 4 | RSV | | | | | | | |

180

Fig. 18

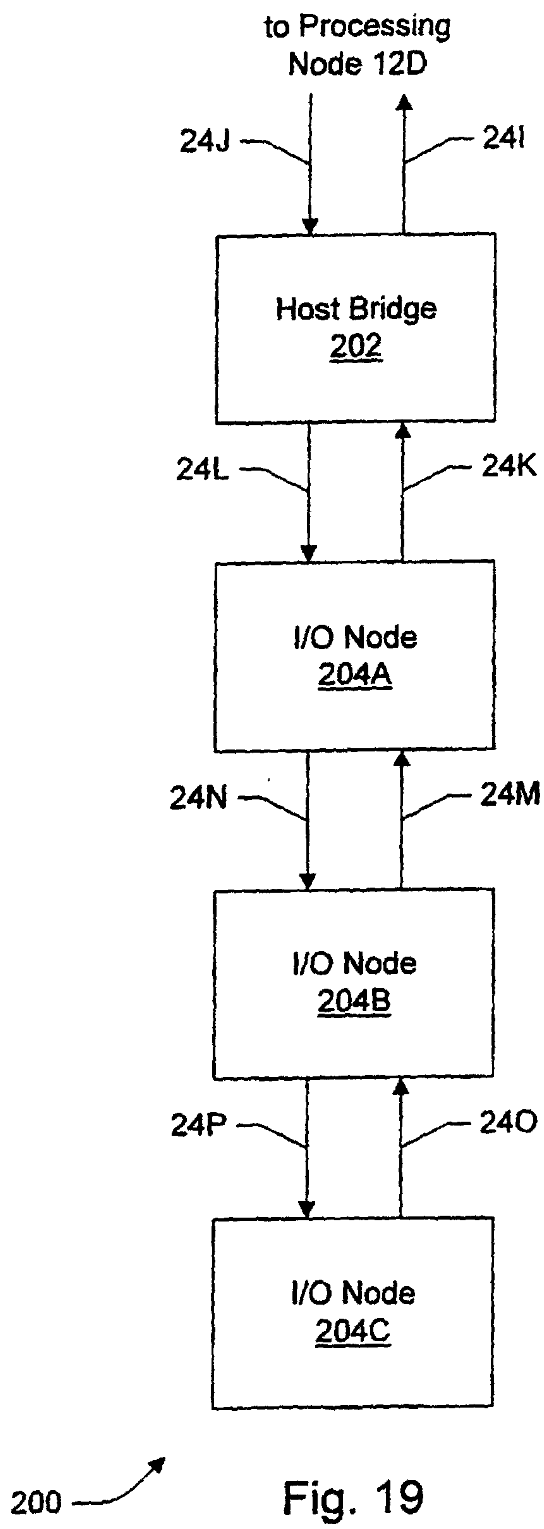
to Processing
Node 12D
24J
24I
Host Bridge
202
24L
24K
I/O Node
204A
24N
24M
I/O Node
204B
24P
24O
I/O Node
204C
200

Fig. 19

| CMD Code | VChan | Command | Packet Type |
|---|---|---|---|
| 000000 | - | Nop | Info |
| 000001 | | Reserved | |
| 000010 | C | Flush | Command |
| 000011 | | Reserved | |
| 0001xx | | Reserved | |
| x01xxx | C | WrSized | Command/Data |
| 01xxxx | C | ReadSized | Command |
| 100xxx | | Reserved | |
| 110000 | R | RdResponse | Response/Data |
| 110001 | | Reserved | |
| 110010 | | Reserved | |
| 110011 | R | TgtDone | Response |
| 11010x | | Reserved | |
| 110110 | | Reserved | |
| 110111 | R | AssignAck | Response |
| 11100x | | Reserved | |
| 111010 | C | Broadcast | Command |
| 111011 | | Reserved | |
| 11110x | | Reserved | |
| 111110 | - | Assign | Info |
| 111111 | - | Sync | Info |

210

Fig. 20

| Bit Time | 7 | 6 | 5 | 4 | 3 | 2 | 1 | 0 |
|---|---|---|---|---|---|---|---|---|
| 1 | SeqID[3:2] | | CMD[5:0] | | | | | |
| 2 | | SeqID[1:0] | | UnitID[4:0] | | | | |
| 3 | | | | SrcTag[4:0] | | | | |
| 4 | | | | | | | | |
| 5 | Addr[15:8] | | | | | | | |
| 6 | Addr[23:16] | | | | | | | |
| 7 | Addr[31:24] | | | | | | | |
| 8 | Addr[39:32] | | | | | | | |

212

Fig. 21

| Bit Time | 7 | 6 | 5 | 4 | 3 | 2 | 1 | 0 |
|---|---|---|---|---|---|---|---|---|
| 1 | | | CMD[5:0] | | | | | |
| 2 | | | | UnitID[4:0] | | | | |
| 3 | | | | SrcTag[4:0] | | | | |
| 4 | | | | | | | | |

214

Fig. 22

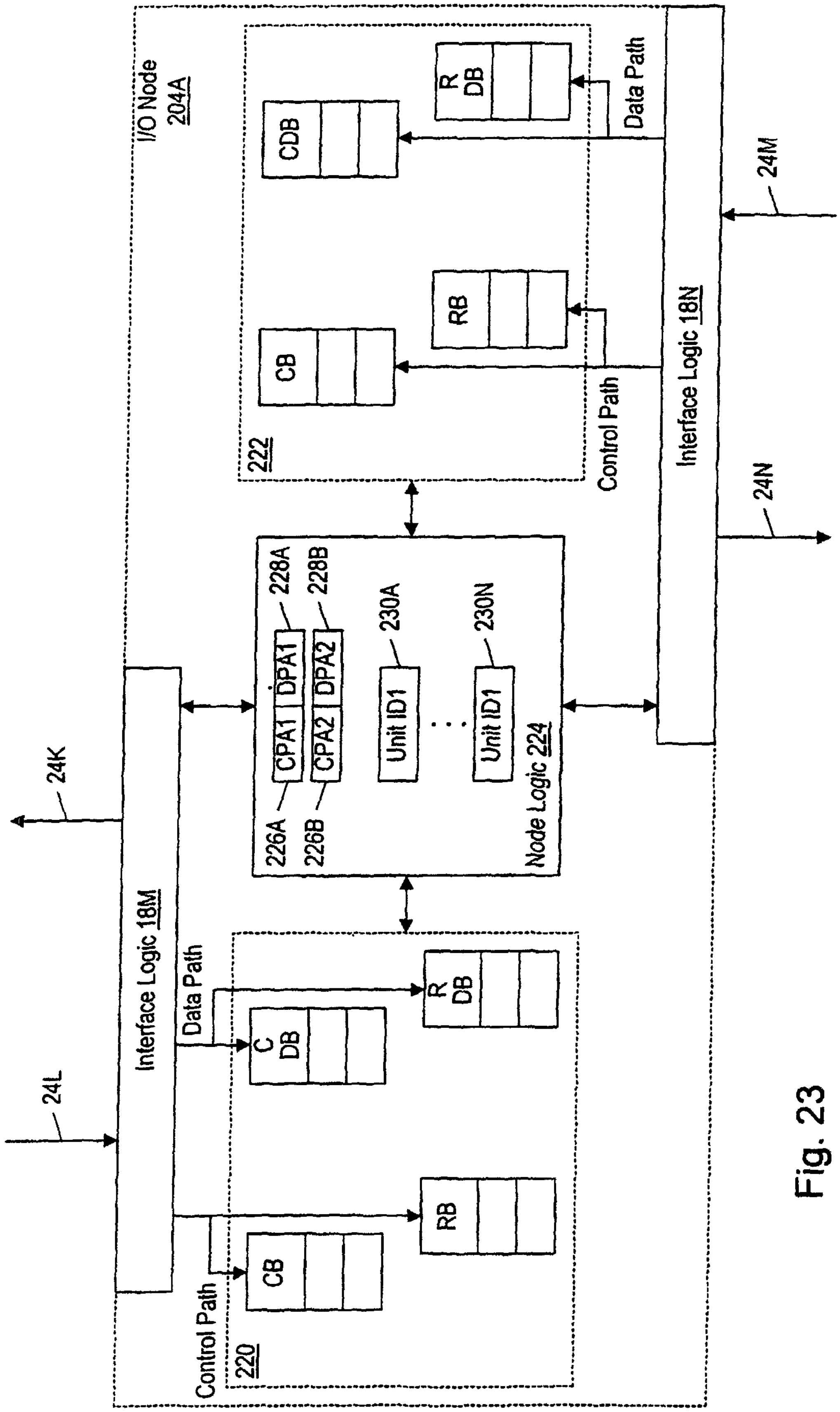

I/O Node 204A
222
CB
CDB
RB
R DB
Control Path
Data Path
Interface Logic 18N
24M
24N
Node Logic 224
CPA1
DPA1
CPA2
DPA2
226A
226B
228A
228B
Unit ID1
Unit ID1
230A
230N
Interface Logic 18M
24K
24L
220
CB
C DB
RB
R DB
Control Path
Data Path


Fig. 23

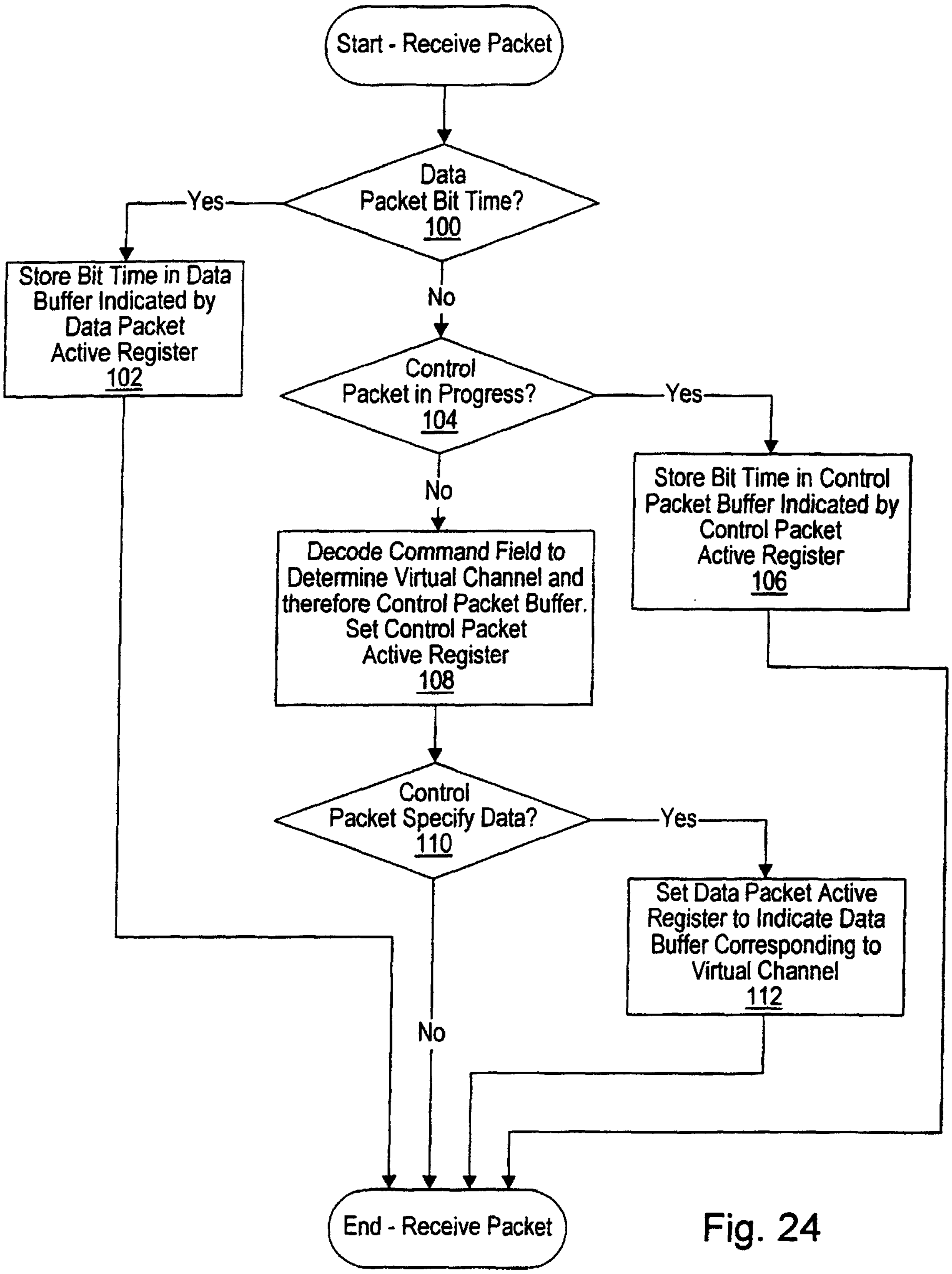

Start - Receive Packet
Data Packet Bit Time? 100
Yes
No
Store Bit Time in Data Buffer Indicated by Data Packet Active Register 102
Control Packet in Progress? 104
Yes
No
Store Bit Time in Control Packet Buffer Indicated by Control Packet Active Register 106
Decode Command Field to Determine Virtual Channel and therefore Control Packet Buffer. Set Control Packet Active Register 108
Control Packet Specify Data? 110
Yes
No
Set Data Packet Active Register to Indicate Data Buffer Corresponding to Virtual Channel 112
End - Receive Packet


Fig. 24

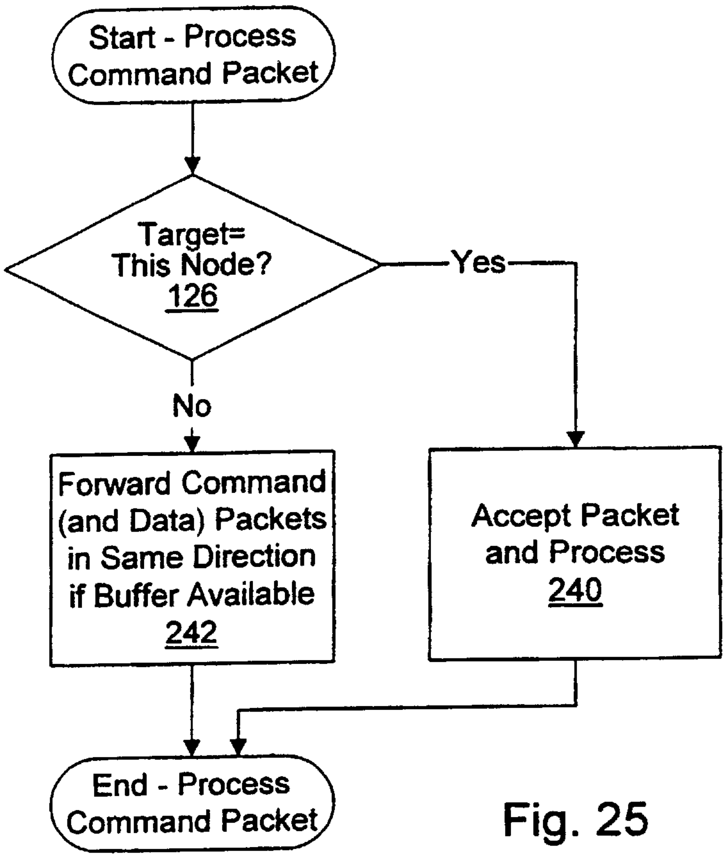
Start - Process
Command Packet
Target=
This Node?
126
Yes
No
Forward Command
(and Data) Packets
in Same Direction
if Buffer Available
242
Accept Packet
and Process
240
End - Process
Command Packet

Fig. 25

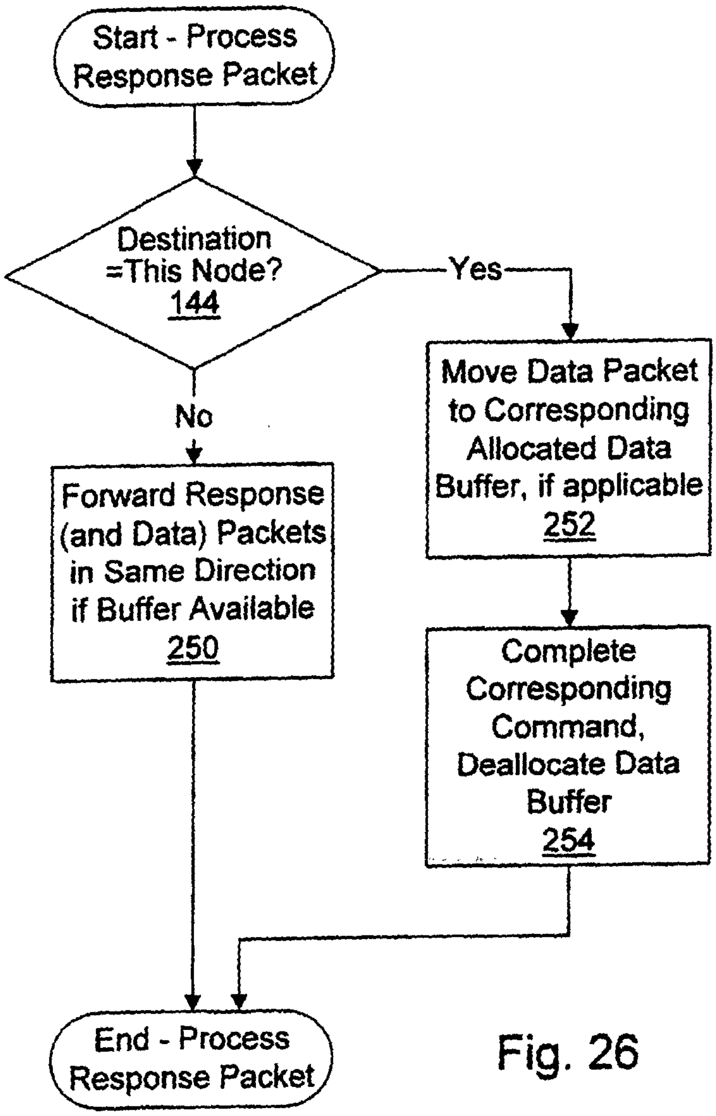
Start - Process Response Packet
Destination =This Node? 144
Yes
No
Move Data Packet to Corresponding Allocated Data Buffer, if applicable 252
Forward Response (and Data) Packets in Same Direction if Buffer Available 250
Complete Corresponding Command, Deallocate Data Buffer 254
End - Process Response Packet

Fig. 26

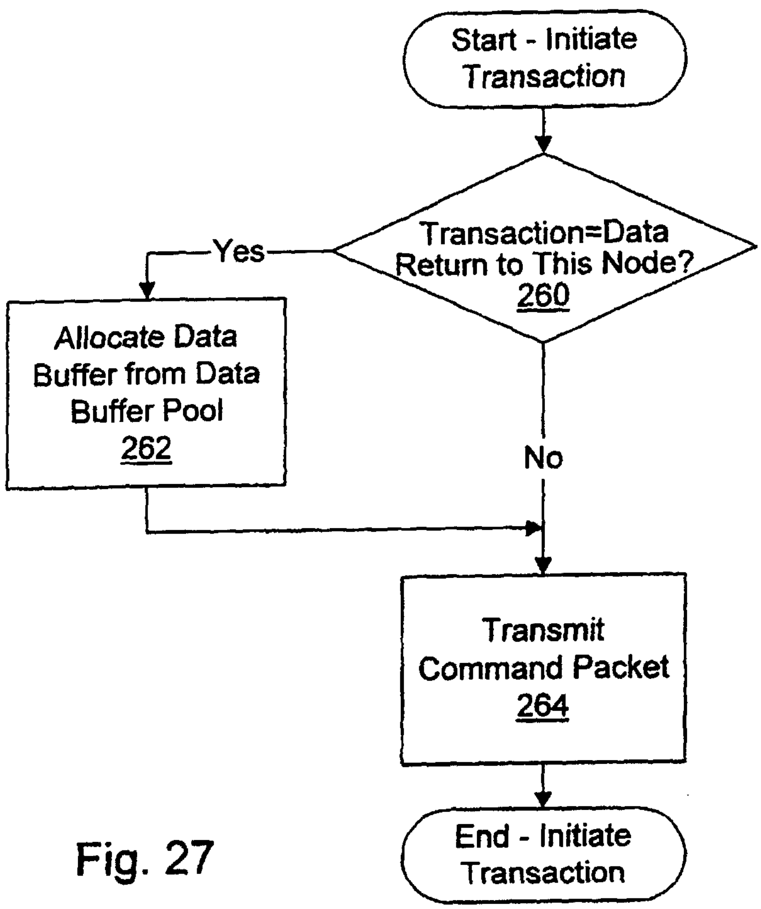
Start - Initiate Transaction
Transaction=Data Return to This Node? 260
Yes
No
Allocate Data Buffer from Data Buffer Pool 262
Transmit Command Packet 264
End - Initiate Transaction

Fig. 27